(19) Europäisches Patentamt
European Patent Office
Office européen des brevets

(11) EP 4 527 960 A1

(12) EUROPEAN PATENT APPLICATION

(43) Date of publication:
**26.03.2025 Bulletin 2025/13**

(21) Application number: **24196597.9**

(22) Date of filing: **27.08.2024**

(51) International Patent Classification (IPC):
***C22C 1/04*** *(2023.01)* ***B22F 1/102*** *(2022.01)*
***B33Y 10/00*** *(2015.01)* ***B22F 10/14*** *(2021.01)*

(52) Cooperative Patent Classification (CPC):
**B22F 10/14; B22F 1/102; B33Y 10/00; C22C 1/0416**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151666**

(71) Applicant: **Ricoh Company, Ltd.**
**Tokyo 143-8555 (JP)**

(72) Inventor: **SHINGAI, Yuki**
**Tokyo, 143-8555 (JP)**

(74) Representative: **SSM Sandmair Patentanwälte Rechtsanwalt Partnerschaft mbB**
**Joseph-Wild-Straße 20**
**81829 München (DE)**

# (54) METHOD FOR PRODUCING THREE-DIMENSIONAL FABRICATED OBJECT AND FABRICATION LIQUID FOR PRODUCING THREE-DIMENSIONAL FABRICATED OBJECT

(57) A method for producing a three-dimensional fabricated object is provided including forming (S1) a powder layer containing a powder containing metal particles and applying (S2), to the powder layer, a fabrication liquid containing an organic solvent and at least one high-acid-value compound with an acid value of 120 mgKOH/g or more, selected from the group consisting of a rosin compound, a styrene compound, and an acrylic compound.

FIG. 1

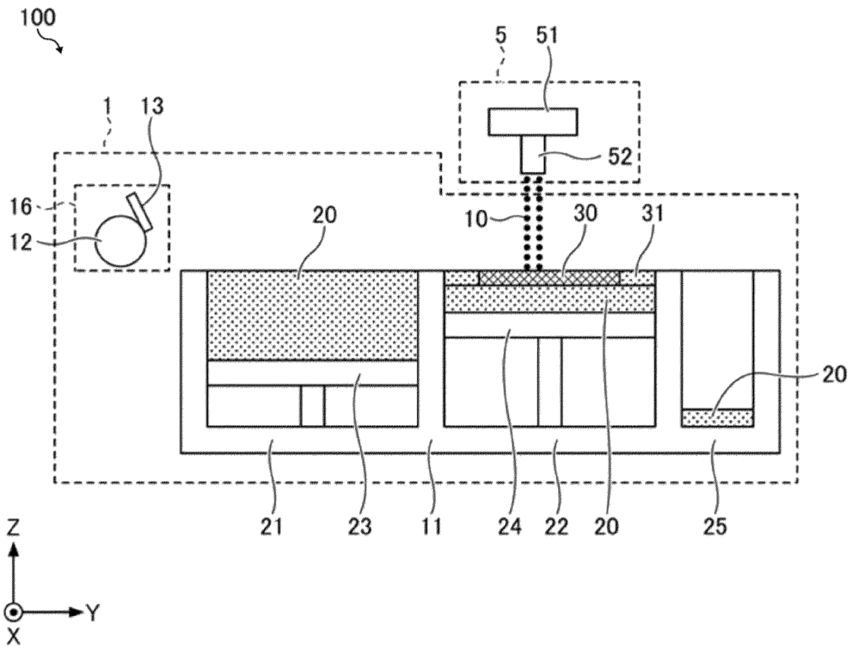




Processed by Luminess, 75001 PARIS (FR)

## Description

BACKGROUND

Technical Field

The present disclosure relates to a method for producing a three-dimensional fabricated object and a fabrication liquid for producing a three-dimensional fabricated object.

Related Art

In recent years, there has been an increasing need for producing a complex and fine fabricated object made of metal or the like. As a technology to meet this need, a method has been proposed in which a fabricated object is fabricated with a binder jetting (hereinafter also referred to as "BJ") method using a powder containing metal particles, and then the resulting object is sintered using a powder metallurgy method.

As a technology for sintering a powder containing metal particles, for example, Japanese Patent No. 6262404 discloses a conductive ink that can be sintered at low temperatures to produce a conductive film pattern that has sufficient conductivity and good adhesion to a substrate. This conductive ink includes silver nanoparticles, a dispersion medium, and a terpene resin, a rosin, or the like with a softening point of 90°C or higher, attached to the surface of the silver nanoparticles or included in the dispersion medium. In this conductive ink, short-chain amines having 5 or less carbon atoms are attached to at least a part of the surface of the silver nanoparticles.

This conductive ink contains the metal particles, and the terpene resin, the rosin, or the like is used as an adhesive that does not inhibit sintering. Thus, the rosin remains in the conductive film after sintering, making it difficult to improve the sintering density.

SUMMARY

An object of the present invention is to provide a method for producing a three-dimensional fabricated object that can improve the sintering density of three-dimensional fabricated objects.

A method for producing a three-dimensional fabricated object according to embodiments of the present invention as a means for solving the above-described problems includes forming a powder layer containing a powder containing metal particles and applying, to the powder layer, a fabrication liquid containing an organic solvent and at least one high-acid-value compound with an acid value of 120 mgKOH/g or more, selected from the group consisting of a rosin compound, a styrene compound, and an acrylic compound.

According to embodiments of the present invention, a method for producing a three-dimensional fabricated object is provided that can improve the sintering density of three-dimensional fabricated objects.

BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:

FIG. 1 is a schematic diagram of a fabrication device 100 according to one embodiment of the present invention;
FIG. 2A is a schematic diagram illustrating an operation of the fabrication device 100 according to one embodiment of the present invention;
FIG. 2B is a schematic diagram illustrating an operation of the fabrication device 100 according to one embodiment of the present invention;
FIG. 2C is a schematic diagram illustrating an operation of the fabrication device 100 according to one embodiment of the present invention;
FIG. 2D is a schematic diagram illustrating an operation of the fabrication device 100 according to one embodiment of the present invention;
FIG. 2E is a schematic diagram illustrating an operation of the fabrication device 100 according to one embodiment of the present invention;
FIG. 3 is a schematic diagram illustrating a fabrication system of a three-dimensional fabricated object according to one embodiment of the present invention; and
FIG. 4 is a flowchart of a method for producing a three-dimensional fabricated object according to one embodiment of the present invention.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a", "an", and "the" are intended to include the plural forms as well, unless the context clearly indicates otherwise.

Embodiments of the present invention are described in detail below. Note that the embodiments are not limited to the following description, and other embodiments, additions, modifications, and deletions that are within the reach of persons ordinarily skilled in the art may be made. Any mode that exhibits the functions and effects of the present invention is included within the scope of the present invention.

In the present disclosure, a numerical range "x to y" means a set of values with a lower limit (x) and an upper limit (y), unless otherwise specified.

(Method for producing three-dimensional fabricated object)

A method for producing a three-dimensional fabricated object according to an embodiment of the present invention includes a powder layer formation step of forming a powder layer containing a powder containing metal particles and a fabrication liquid application step of applying, to the powder layer, a fabrication liquid containing an organic solvent and at least one high-acid-value compound with an acid value of 120 mgKOH/g or more, selected from the group consisting of a rosin compound, a styrene compound, and an acrylic compound. The method preferably further includes a heating step, a degreasing step, and a sintering step. The method further includes, if necessary, other steps such as an excess powder removal step.

A wide variety of metals, including an aluminum alloy, are being considered for a powder containing metal particles used in the BJ method. Of these, a solvent-based ink is being considered as an ink for the BJ method suitable for the aluminum alloy from the viewpoint of handling of an aluminum powder. However, it is known that, depending on the composition of the aluminum alloy, it is difficult to densify the ink through sintering. For example, a valve metal such as magnesium, titanium, zinc, or tantalum easily reacts with oxygen and forms an oxide film on the metal surface, resulting in an extremely high melting point, which inhibits sintering of the metal. Thus, there is a need for an ink that is more suitable for the aluminum alloy.

It has been found that, among the valve metals, the aluminum alloy with a particularly high magnesium content is hardly densified through sintering compared to the aluminum alloy that does not include magnesium or that has a low magnesium content.

The method for producing the three-dimensional fabricated object according to an embodiment of the present invention uses a fabrication liquid that contains an organic solvent and at least one high-acid-value compound with an acid value of 120 mgKOH/g or more, selected from the group consisting of a rosin compound, a styrene compound, and an acrylic compound. Thus, the method can thin or remove the oxide film on the surface of the metal particles which has been a conventional problem, making it possible to increase the sintering density of the three-dimensional fabricated object. In particular, the method for producing the three-dimensional fabricated object according to an embodiment of the present invention can suitably thin or remove the oxide film on the surface of the metal particles, even if the metal particles that are prone to forming an oxide film on their surface are used, making it possible to increase the sintering density of the three-dimensional fabricated object.

The terms used in the present disclosure are defined as follows.

In the present disclosure, the term "fabricated object" refers to an object that is formed by undergoing a powder layer formation step of forming a powder layer containing a powder containing metal particles and a fabrication liquid application step of applying a fabrication liquid to the powder layer, or by repeating the powder layer formation step and the fabrication liquid application step.

The term "solidified object" is a structure having a three-dimensional object keeping a certain three-dimensional shape. Further, the term "solidified object" refers to an object that has not undergone an excess powder removal step of removing an excess powder that does not constitute the three-dimensional object.

Further, in the present disclosure, the term "three-dimensional fabricated object precursor" refers to an object

that has undergone the excess powder removal step of removing the excess powder. Further, the term "three-dimensional fabricated object precursor" refers to an object that maintains a certain three-dimensional shape and is preferably substantially free of the excess powder.

Further, in the present disclosure, the term "three-dimensional fabrication" refers to steps up to the production of the three-dimensional fabricated object precursor before a degreasing step.

Further, in the present disclosure, the term "degreased object" refers to an object obtained by a degreasing step of degreasing an organic material from the solidified object or the three-dimensional fabricated object precursor.

Further, in the present disclosure, the term "sintered object" refers to an object obtained by forming the metal material constituting the metal particles into one piece and obtained by a sintering step of sintering the degreased object.

Further, in the present disclosure, the term "three-dimensional fabricated object" mainly refers to an object obtained after all the steps are completed. Thus, when the method for producing the three-dimensional fabricated object includes other steps such as the degreasing step and the sintering step, the term "three-dimensional fabricated object" refers to an object obtained after other steps are completed. That is, when the method for producing the three-dimensional fabricated object includes a post-treatment step, the term "three-dimensional fabricated object" refers to a sintered object after the post-treatment step.

<Powder layer formation step>

A powder layer formation step is a step of forming a powder layer containing a powder containing metal particles (hereinafter also simply referred to as "powder").

The powder layer is preferably formed on a fabrication stage. There is no particular limitation on a method for forming the powder layer by placing the powder on the fabrication stage, and the method can be selected as appropriate depending on the purpose. However, examples of the method include a method using a known counter rotation mechanism (counter roller) or the like, a method using a member such as a brush, a roller, or a blade, a method of pressing the surface of powder with a pressing member, and a method using a known lamination fabrication device.

When the powder layer is formed using a powder layer formation units for forming the powder layer, such as the counter rotation mechanism (counter roller), the brush, the roller, the blade, or the pressing member, it can be performed, for example, in the following method. That is, the powder is placed on the fabrication stage, which is installed on an inner wall of an outer frame (also referred to as "mold", "hollow cylinder", "cylindrical structure", or the like) so as to be movable up and down while sliding, using the counter rotation mechanism (counter roller), the brush, the roller, the blade, or the pressing member. During this process, when the fabrication stage that can move up and down inside the outer frame is used, the fabrication stage is positioned slightly lower than a top opening of the outer frame, that is, the fabrication stage is moved downward by the thickness of the powder layer, and then the powder is placed on the fabrication stage.

In this manner, the powder layer of the powder can be placed on the fabrication stage.

The thickness of the powder layer is not particularly limited and can be selected as appropriate depending on the purpose. However, the average thickness per layer is preferably 30 μm or more and 500 μm or less, more preferably 60 μm or more and 300 μm or less. When the average thickness of the powder layer is 30 μm or more, the strength of the fabricated object formed by applying the fabrication liquid to the powder can be enhanced, and deformation or the like that may occur in the subsequent steps such as the sintering step can be prevented. Further, when the average thickness of the powder layer is 500 μm or less, the dimensional accuracy of the fabricated object formed by applying the fabrication liquid to the powder can be increased.

In the present disclosure, the term "average thickness" of the powder layer refer to an average value of the thickness of the powder layer at three freely selected locations.

<<Powder containing metal particles>>

The powder containing metal particles contains metal particles and further contains other components as necessary.

The powder containing metal particles is a powder containing a plurality of metal particles, and the fabricated object is produced by applying the fabrication liquid to the powder layer containing the powder.

An angle of repose of the powder containing metal particles is not particularly limited and can be selected as appropriate depending on the purpose. However, the angle of repose is preferably 60° or less, more preferably 50° or less, still more preferably 40° or less. When the angle of repose of the powder containing metal particles is 60° or less, the powder containing metal particles can be efficiently and stably placed on the fabrication stage at a desired location.

The angle of repose of the powder containing metal particles can be measured using, for example, a powder characteristic measuring device (Powder Tester model PT-N, manufactured by Hosokawa micron crop.) or the like.

-Metal particles-

The metal particles include at least one selected from the group consisting of particles made of a pure metal and particles made of an alloy. Further, the metal particles are particles that contain a metal as a constituent material of the fabricated object. Note that the metal particles are not particularly limited as long as they contain a metal, and may be particles made of a pure metal or particles made of an alloy, or may contain a material other than the metal. However, the metal particles preferably include a metal as a main material. Further, the powder containing metal particles may be a powder containing metal particles made of a pure metal and metal particles made of an alloy.

The main material being a metal means that the mass ratio of the metal contained in the metal particles is 50.0% by mass or more. Preferably, the mass ratio of the metal contained in the metal particles is 60.0% by mass or more, more preferably 70.0% by mass or more, still more preferably 80.0% by mass or more, particularly preferably 90.0% by mass or more.

Examples of the metal that is a constituent material of the metal particles include aluminum (Al), magnesium (Mg), silicon (Si), titanium (Ti), vanadium (V), chromium (Cr), manganese (Mn), iron. (Fe), cobalt (Co), nickel (Ni), copper (Cu), zinc (Zn), yttrium (Y), zirconium (Zr), niobium (Nb), molybdenum (Mo), lead (Pd), silver (Ag), indium (In), tin (Sn), tantalum (Ta), tungsten (W), neodymium (Nd), and an alloy of these metals. Of these, stainless (SUS) steel, iron (Fe), copper (Cu), silver (Ag), titanium (Ti), aluminum (Al), magnesium (Mg), silicon (Si), an alloy of these metals, and the like are preferably used, and aluminum (Al), magnesium (Mg), silicon (Si), an alloy of these metals, and the like are more preferably used.

An alloy containing magnesium (Mg) that has low density and high specific strength is widely used in electronic device housings and automobile-related parts, which are emphasized in light weight. However, such an alloy easily forms an oxide film. On the other hand, in the method for producing the three-dimensional fabricated object according to an embodiment of the present invention, even if the metal particles are made of an alloy containing magnesium (Mg), the oxide film on the surface of the metal particles can be suitably thinned or removed by using the fabrication liquid according to an embodiment of the present invention. This makes it possible to improve the sintering density of the three-dimensional fabricated object.

When liquid phase sintering is performed as a method for sintering the degreased object, silicon (Si) breaks through and comes out of the oxide film of the metal particles. As a result, silicon (Si) can fill the gaps between the metal particles, making it possible to suitably promote sintering between the metal particles.

Examples of the aluminum alloy include AlSi10Mg, AlSi12, AlSi7Mg0.6, AlSi3Mg, AlSi1Mg, AlSi9Cu3, Toyal Scalmalloy (registered trademark) (AlMg4.5Sc0.7Zr0.3, manufactured by Toyo Aluminium K.K.), ADC12, and AlSi3. These may be used alone or in combination of two or more.

The metal particles can be produced using a conventionally known method. There is no particular limitation on the method for producing the metal particles. However, examples of the method include a pulverization method in which a solid metal is fragmented by applying compression, impact, friction, or the like, an atomization method in which a molten metal is sprayed to obtain a quenched powder, a precipitation method in which a metal-derived component dissolved in a liquid is precipitated, and a gas phase reaction method in which a metal compound is vaporized and crystallized.

Of these, the atomization method is preferable as the method for producing the metal particles because it provides a spherical shape and less variation in the particle diameter. Examples of the atomization method include a water atomization method, a gas atomization method, a centrifugal atomization method, and a plasma atomization method, and any of them is preferably used.

A commercially available product may be used as the metal particles. Examples of the commercially available product include AlSilOMg (manufactured by Toyo Aluminium K.K., Si10MgBB), AlSilMg (manufactured by Toyo Aluminium K.K., Si1MgBB), a pure Al (manufactured by Toyo Aluminium K.K., A1070-30BB), a pure Ti (manufactured by Osaka Titanium Technologies), SUS316L (manufactured by Sanyo Special Steel Co., Ltd., product name: PSS316L), $SiO_2$ (manufactured by Tokuyama Corp., product name: EXCELICA SE-15K), $AlO_2$ (manufactured by Taimei Chemicals Co., Ltd., product name: TAIMICRON TM-5D), and $ZrO_2$ (manufactured by Tosoh Corp., product name: TZ-B53).

The volume average particle diameter of the metal particles is not particularly limited and can be selected as appropriate depending on the purpose. However, the volume average particle diameter is preferably 2 μm or more and 100 μm or less, more preferably 8 μm or more and 50 μm or less. When the volume average particle diameter of the metal particles is 2 μm or more, agglomeration of the metal particles can be prevented, thereby preventing a decrease in the production efficiency of the three-dimensional fabricated object and a decrease in the handleability of the metal particles. Further, when the volume average particle diameter of the metal particles is 100 μm or less, a decrease in the number of the metal particles contacting each other and an increase in gaps between the metal particles can be prevented, thereby preventing a decrease in the strength of the three-dimensional fabricated obj ect.

The particle size distribution of the metal particles is not particularly limited and can be selected as appropriate depending on the purpose. However, the particle size distribution preferably has a sharper distribution.

The volume average particle diameter and particle size distribution of the metal particles can be measured using

a known particle diameter measuring device. Examples thereof include a particle diameter distribution measuring device (MICROTRAC MT3000II series, manufactured by MicrotracBEL Corp.).

-Other components-

Other components contained in the powder containing metal particles are not particularly limited as long as they do not impair the effects of the present invention, and can be selected as appropriate depending on the purpose. However, examples of other components include a filler, a leveling agent, a sintering aid, and a polymer resin particle. These may be used alone or in combination of two or more.

--Filler--

A filler is a material that is effectively adhered to the surfaces of the metal particles and is effective in filling the gaps between the metal particles. For example, using the filler can improve the fluidity of the powder, and can also increase the number of the metal particles contacting each other and decrease the gaps between the metal particles, making it possible to increase the strength and dimensional accuracy of the three-dimensional fabricated obj ect.

--Leveling agent--

A leveling agent is a material that is effective in controlling the wettability at the surface of the powder layer. For example, using the leveling agent can improve the permeability of the powder layer into the fabrication liquid, and can also increase the number of the metal particles contacting each other and decrease the gaps between the metal particles, making it possible to increase the strength and dimensional accuracy of the three-dimensional fabricated object.

--Sintering aid--

A sintering aid is a material that is effective in increasing the sintering efficiency when the degreased object is sintered. For example, using the sintering aid can improve the strength of the three-dimensional fabricated object, lower the sintering temperature, and shorten the sintering time.

--Polymer resin particle--

A polymer resin particle is a material that is effectively adhered to the surface of the metal particles, and is also referred to as an organic external additive. The average particle diameter of the polymer resin particle is not particularly limited and can be selected as appropriate depending on the purpose. However, the average particle diameter is preferably 0.1 μm or more and 10.0 μm or less, more preferably 0.1 μm or more and 1.0 μm or less.

<Fabrication liquid application step>

A fabrication liquid application step is a step of applying, to the powder layer, a fabrication liquid containing an organic solvent and at least one high-acid-value compound with an acid value of 120 mgKOH/g or more, selected from the group consisting of a rosin compound, a styrene compound, and an acrylic compound. The fabricated object is obtained through the powder layer formation step and the fabrication liquid application step or by repeating the powder layer formation step and the fabrication liquid application step.

As a method of applying the fabrication liquid to the powder layer, a method of discharging the fabrication liquid is preferable. The method of discharging the fabrication liquid is not particularly limited and can be selected as appropriate depending on the purpose. However, examples thereof include a dispenser method, a spray method, and an inkjet method.

<<Fabrication liquid>>

The fabrication liquid contains an organic solvent and at least one high-acid-value compound with an acid value of 120 mgKOH/g or more, selected from the group consisting of a rosin compound, a styrene compound, and an acrylic compound. The fabrication liquid may further contain other components such as a resin other than the high-acid-value compound, and an additive.

The viscosity of the fabrication liquid is not particularly limited and can be selected as appropriate depending on the purpose. However, the viscosity at 25°C is preferably 5 mPa·s or more and 50 mPa·s or less, more preferably 5 mPa s or more and 40 mPa·s or less, still more preferably 5 mPa·s or more and 30 mPa·s or less. When the viscosity of the

fabrication liquid is 5 mPa·s or more and 50 mPa·s or less at 25°C, the discharge from a fabrication liquid application unit such as an inkjet head is stabilized, and the accurate discharge of the fabrication liquid can further improve the bending strength of the fabricated object, the solidified object, the three-dimensional fabricated object precursor, and the like before sintering, and can also improve the dimensional accuracy.

Note that the viscosity of the fabrication liquid can be measured, for example, in accordance with JIS K 7117-2:1999.

The surface tension of the fabrication liquid is not particularly limited and can be selected as appropriate depending on the purpose. However, the surface tension at 25°C is preferably 40 mN/m or less, more preferably 10 mN/m or more and 40 mN/m or less, still more preferably 10 mN/m or more and 30 mN/m or less. When the surface tension of the fabrication liquid is 40 mN/m or less, the discharge from the fabrication liquid application unit such as an inkjet head is stabilized, and the accurate discharge of the fabrication liquid further improves the bending strength of the fabricated object, the solidified object, the three-dimensional fabricated object precursor, and the like before sintering, and also improves the dimensional accuracy.

Note that the surface tension of the fabrication liquid can be measured, for example, using an automatic surface tension meter (DY-300, manufactured by Kyowa Interface Science Co., Ltd.).

-High-acid-value compound-

The high-acid-value compound comprises at least one compound with an acid value of 120 mgKOH/g or more, selected from the group consisting of a rosin compound, a styrene compound, and an acrylic compound. The fabrication liquid containing the high-acid-value compound has the advantage that the oxide film on the metal particles can be suitably thinned or removed and that the high-acid-value compound is eventually decomposed without any residue.

[Acid value]

The acid value of the high-acid-value compound is not particularly limited as long as it is 120 mgKOH/g or more. However, the upper limit value is preferably 350 mgKOH/g or less, more preferably 300 mgKOH/g or less.

The acid value of the high-acid-value compound may be recited in a catalog or calculated by measurement.

The acid value of the high-acid-value compound can be measured, for example, in accordance with JIS K 0070:1992 or JIS K 2501:2003.

[Glass transition temperature (Tg)]

The glass transition temperature (Tg) of the high-acid-value compound is not particularly limited and can be selected as appropriate depending on the purpose. However, the lower limit value is preferably 45°C or higher, more preferably 50°C or higher, still more preferably 60°C or higher. The glass transition temperature (Tg) of the fabrication liquid is preferably 60°C or higher because the desired shape of the fabricated object, the solidified object, the three-dimensional fabricated object precursor, and the like before sintering can be maintained without being softened at the environmental temperature.

The glass transition temperature (Tg) of the high-acid-value compound can be measured, for example, using a differential scanning calorimetry (DSC) device (e.g., DSC2500, manufactured by TA Instruments Japan Inc.). Specifically, the glass transition temperature (Tg) of the high-acid-value compound can be measured by the following procedure.

First, 1g of the fabrication liquid is measured into an aluminum cup and heated on a hot stirrer at 150°C for 6 hours to obtain a dried product. Apart of the dried product is scraped off from the aluminum cup and used as a target sample. The target sample is placed in an alumina sample container, and the sample container is placed on a holder unit and set in an electric furnace. Next, in a range from -30°C to 200°C, heating to 200°C (first time), cooling to -30°C (second time), heating to 200°C (third time), and cooling to -30°C (fourth time) are performed, and data at the third temperature increase is taken as the glass transition temperature (Tg) of the high-acid-value compound.

-Rosin compound with acid value of 120 mgKOH/g or more-

A rosin compound with an acid value of 120 mgKOH/g or more is not particularly limited and can be selected as appropriate depending on the purpose. However, such a rosin compound is preferably at least one selected from the group consisting of an acid-modified rosin, a polymerized rosin, a hydrogenated rosin, a rosin-modified maleic acid resin, a formylated rosin, a fumarated rosin, a rosin-modified alkyd resin, and an acrylated rosin resin, more preferably an acid-modified rosin and a polymerized rosin.

The molecular weight of the rosin compound with an acid value of 120 mgKOH/g or more is not particularly limited. However, the number average molecular weight (Mn) is preferably 300 or more and 100,000 or less, more preferably 600

or more and 30,000 or less.

A method for measuring the number average molecular weight (Mn) of the rosin compound with an acid value of 120 mgKOH/g or more is not particularly limited and can be selected as appropriate depending on the purpose. For example, the number average molecular weight (Mn) can be measured by a gel permeation chromatography method.

The rosin compound with an acid value of 120 mgKOH/g or more may be a commercially available product or may be synthesized as appropriate.

Examples of the commercially available rosin compound with an acid value of 120 mgKOH/g or more include PINECRYSTAL KR-120 (acid modified ultra pale colored rosin), PINECRYSTAL KE-604 (acid modified ultra pale colored rosin), and PINECRYSTAL KR-140 (ultra pale colored polymerized rosin) (manufactured by Arakawa Chemical Industries, Ltd.), and TESPOL 1150 (rosin modified maleic acid resin) and TESPOL 1158 (rosin modified maleic acid resin) (manufactured by Harima Chemicals Group, Inc.).

A method for synthesizing the rosin compound with an acid value of 120 mgKOH/g or more is not particularly limited and can be selected as appropriate from known methods.

-Styrene compound with acid value of 120 mgKOH/g or more-

A styrene compound with an acid value of 120 mgKOH/g or more is not particularly limited and can be selected as appropriate depending on the purpose. However, such a styrene compound is preferably at least one selected from the group consisting of a styrene acrylic resin and a styrene maleic acid resin.

The molecular weight of the styrene compound with an acid value of 120 mgKOH/g or more is not particularly limited. However, the number average molecular weight (Mn) is preferably 300 or more and 100,000 or less, more preferably 600 or more and 30,000 or less.

The number average molecular weight (Mn) of the styrene compound with an acid value of 120 mgKOH/g or more can be measured with the same method as for the rosin compound.

The styrene compound with an acid value of 120 mgKOH/g or more may be a commercially available product or may be synthesized as appropriate.

Examples of the commercially available styrene compound with an acid value of 120 mgKOH/g or more include HS-2190 (styrene acrylic resin) (manufactured by Seiko PMC Corp.) and X-200 (styrene maleic acid resin) (manufactured by Seiko PMC Corp.).

A method for synthesizing the styrene compound with an acid value of 120 mgKOH/g or more is not particularly limited and can be selected as appropriate from known methods.

-Acrylic compound with acid value of 120 mgKOH/g or more-

An acrylic compound with an acid value of 120 mgKOH/g or more is not particularly limited and can be selected as appropriate depending on the purpose. However, such an acrylic compound is preferable an acrylic resin.

The molecular weight of the acrylic compound with an acid value of 120 mgKOH/g or more is not particularly limited. However, the number average molecular weight (Mn) is preferably 300 or more and 100,000 or less, more preferably 600 or more and 30,000 or less.

The number average molecular weight (Mn) of the acrylic compound with an acid value of 120 mgKOH/g or more can be measured with the same method as for the rosin compound.

The acrylic compound with an acid value of 120 mgKOH/g or more may be a commercially available product or may be synthesized as appropriate.

Examples of the commercially available acrylic compound with an acid value of 120 mgKOH/g or more include RS-1190 (acrylic resin) (manufactured by Seiko PMC Corp.).

A method for synthesizing the acrylic compound with an acid value of 120 mgKOH/g or more is not particularly limited and can be selected as appropriate from known methods.

Note that whether the three-dimensional fabricated object precursor includes the high-acid-value compound can be confirmed by analyzing it using a gas chromatography mass spectrometry method or the like.

The content of the high-acid-value compound is not particularly limited and can be selected as appropriate depending on the purpose. However, the content is preferably 1% by mass or more and 20% by mass or less, more preferably 3% by mass or more and 15% by mass or less. When the content of the high-acid-value compound is 1% by mass or more, the sintering density can be easily improved by suitably thinning or removing the oxide film on the metal particles. When the content is 30% by mass or less, the good inkjet discharge can be maintained.

-Resin other than high-acid-value compound-

A resin other than the high-acid-value compound can function as a binder.

The resin other than the high-acid-value compound is preferably thermally decomposed by 95% by mass or more, more preferably by 97% by mass or more, when the temperature is raised from 30°C to 550°C. The phrase "resin being thermally decomposed" means that the main chain of the resin is randomly decomposed, or the resin is depolymerized or the like at the terminals of molecular chain so that the resin is removed through vaporization, oxidative decomposition, combustion, or the like.

Further, the thermal decomposition is measured with a thermogravimetry differential thermal analyzer (TG-DTA). Specifically, the resin is heated from 30°C to 550°C at a rate of 10°C/min in the atmosphere or in a nitrogen atmosphere, and the temperature is kept for 2 hours after reaching 550°C. Then, a weight loss rate before and after the temperature rising is determined.

The glass transition temperature (Tg) of the resin other than the high-acid-value compound is preferably 45°C or higher, more preferably 50°C or higher, still more preferably 60°C or higher.

The glass transition temperature (Tg) of the resin other than the high-acid-value compound can be measured with the same method as the method for measuring the glass transition temperature (Tg) of the fabrication liquid except that the resin other than the high-acid-value compound is used as the target sample.

The softening point of the resin other than the high-acid-value compound is preferably 70°C or higher, more preferably 80°C or higher, still more preferably 90°C or higher. Further, the softening point of the resin other than the high-acid-value compound is preferably 150°C or lower, more preferably 140°C or lower, still more preferably 130°C or lower.

The softening point of the resin other than the high-acid-value compound can be measured using a micro melting point device (e.g., MP-S3, manufactured by Yanaco Laboratory of Instrument's Developments Co., Ltd.). Specifically, the softening point is measured by heating the target sample at a rate of 2°C/min and observing a state of the target sample.

The number average molecular weight (Mn) of the resin other than the high-acid-value compound is preferably 5,000 or more and 50,000 or less, more preferably 10,000 or more and 30,000 or less.

A method for measuring the number average molecular weight (Mn) of the resin other than the high-acid-value compound is not particularly limited and can be selected as appropriate depending on the purpose. For example, the number average molecular weight (Mn) can be measured by a gel permeation chromatography method.

The resin other than the high-acid-value compound is not particularly limited and can be selected as appropriate depending on the purpose. However, examples thereof include a resin having at least one structural unit selected from the group consisting of a structural unit represented by the following structural formula (1) and a structural unit represented by the following structural formula (2). Note that the term "structural unit" refers to a partial structure in the resin derived from one or more polymerizable compounds.

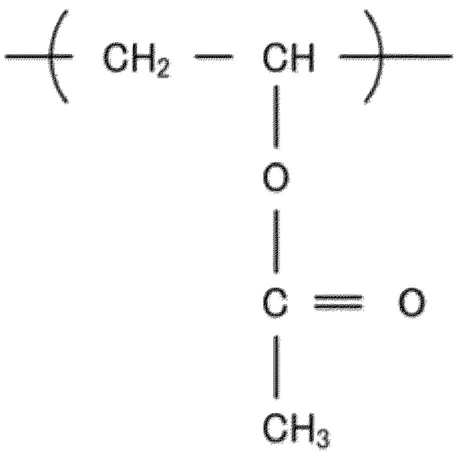

••• Structural Formula (1)

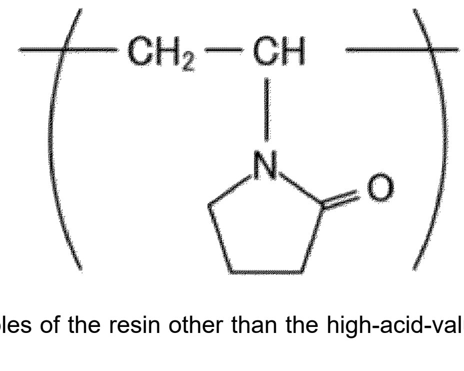

••• Structural Formula (2)

Examples of the resin other than the high-acid-value compound include a polyvinyl acetate resin, a partially

saponified polyvinyl acetate resin, and a polyvinyl butyral resin. Note that these resins may be used alone or in combination of two or more. Both commercially available and synthetic resins can be used for these resins. Note that the partially saponified polyvinyl acetate resin is a resin in which a polyvinyl acetate resin is partially saponified.

In the resin other than the high-acid-value compound, the structural unit represented by the structural formula (1) has hydrophobicity. Further, it is preferable that the resin having the structural unit represented by the structural formula (1) is soluble in the organic solvent of the fabrication liquid and insoluble in water.

The resin having the structural unit represented by the structural formula (1) may be either a resin further having a structural unit other than the structural unit represented by the structural formula (1) or a resin having only the structural unit represented by the structural formula (1). Preferable examples of the structural unit other than the structural unit represented by structural formula (1) include a structural unit represented by the following structural formula (3) and a structural unit represented by the following structural formula (4).

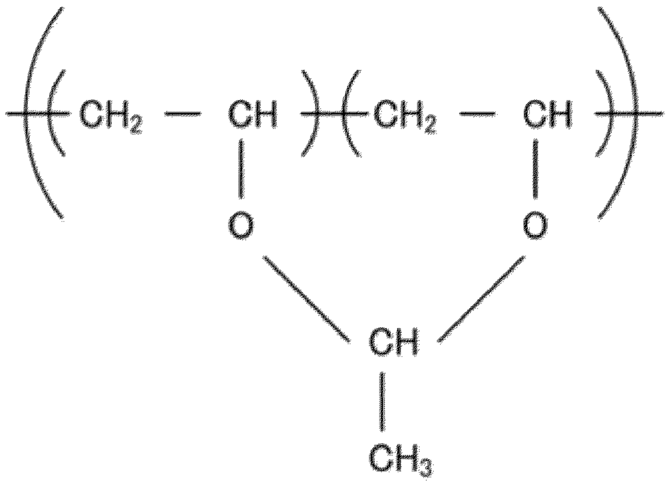

••• Structural Formula (3)

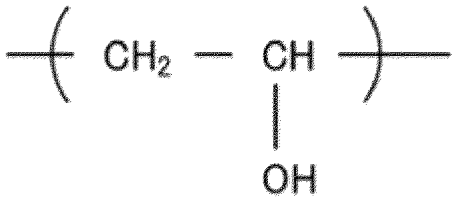

••• Structural Formula (4)

The structural unit represented by the structural formula (3) also has hydrophobicity, thus the solubility of the resin other than the high-acid-value compound in the organic solvent is improved. Further, a hydroxyl group in the structural unit represented by the structural formula (4) improves the affinity with the metal particles in the powder layer to which the fabrication liquid is applied.

The polyvinyl acetate resin has the structural unit represented by the structural formula (1). On the other hand, the polyvinyl acetate resin is a resin that does not substantially have the structural unit represented by the structural formula (3) or the structural unit represented by the structural formula (4).

The partially saponified polyvinyl acetate resin has the structural unit represented by the structural formula (1) and the structural unit represented by the structural formula (4). On the other hand, the partially saponified polyvinyl acetate resin is a resin that does not have the structural unit represented by the structural formula (3).

The polyvinyl butyral resin is a resin that has the structural unit represented by the structural formula (1) and the structural unit represented by the structural formula (3), or a resin that has the structural unit represented by the structural formula (1), the structural unit represented by the structural formula (3), and the structural unit represented by the structural formula (4).

When the fabrication liquid includes the rosin compound with an acid value of 120 mgKOH/g or more as the high-acid-value compound, the fabrication liquid preferably includes a resin that has the structural unit represented by the structural formula (1).

Using the rosin compound with an acid value of 120 mgKOH/g or more together with the resin that has the structural unit represented by the structural formula (1) is preferable as the sintering density after sintering and the strength are improved.

-Organic solvent-

The organic solvent is a liquid component, which keeps the fabrication liquid in a liquid state at normal temperature. Further, the fabrication liquid is preferably a non-aqueous fabrication liquid by containing the organic solvent.

The term "non-aqueous fabrication liquid" refers to a fabrication liquid that contains an organic solvent as a liquid component of the fabrication liquid, in which the organic solvent accounts for the largest mass among the liquid components. Further, in the non-aqueous fabrication liquid, the content of the organic solvent with respect to the content of the liquid components in the fabrication liquid is preferably 90.0% by mass or more, more preferably 95.0% by mass or more.

Further, the non-aqueous fabrication liquid is, for example, a fabrication liquid that does not substantially contain water. The fabrication liquid that does not substantially contain water can be easily applied as a fabrication liquid even when the material constituting the metal particles is a highly active metal (water-reactive material).

In the present disclosure, the phrase "not substantially containing water" means that water is not actively used as a material during the production of the fabrication liquid, or that the water content in the fabrication liquid determined using a known and common technical method is the detection limit or below.

When the fabrication liquid does not substantially contain water, the water content is 10.0% by mass or less, preferably 5.0% by mass or less, more preferably 3.0% by mass or less, still more preferably 1.0% by mass or less, with respect to the total mass of the fabrication liquid. Particularly preferably, the fabrication liquid is free of water. When the fabrication liquid does not substantially contain water, the solubility of the high-acid-value compound can be further improved, and the viscosity of the fabrication liquid can be further reduced.

Further, when the fabrication liquid is the non-aqueous fabrication liquid, the solubility of the resin other than the high-acid-value compound, particularly the solubility of the resin having the structural unit represented by the structural formula (1) improves, and the viscosity of the fabrication liquid decreases, thus the discharge is stabilized.

For example, aluminum forms a film of aluminum hydroxide when contacting water, thus the high content of water in the fabrication liquid causes a problem of reducing the sintering density of the sintered object. On the other hand, using the non-aqueous fabrication liquid can prevent the formation of the aluminum hydroxide film. Further, as another example, aluminum generates hydrogen when contacting water, causing a problem of poor handleability. Using the non-aqueous fabrication liquid can also prevent the generation of hydrogen.

The viscosity of the organic solvent at 25°C is preferably 5 mPa·s or more and 50 mPa·s or less, more preferably 8 mPa·s or more and 30 mPa·s or less. When the viscosity of the organic solvent at 25°C is 5 mPa s or more and 50 mPa·s or less, the viscosity of the fabrication liquid containing the organic solvent is easily reduced. This stabilizes the discharge from the fabrication liquid application unit such as an inkjet head. The accurate discharge of the fabrication liquid further improves the bending strength of the fabricated object, the solidified object, the three-dimensional fabricated object precursor, and the like before sintering, and also improves the dimensional accuracy.

Note that the viscosity of the organic solvent can be measured, for example, in accordance with JIS K 7117-2:1999.

The boiling point of the organic solvent is high, preferably 150°C or higher, more preferably 180°C or higher. The organic solvent having such a high boiling point prevents the fabrication liquid from being dried.

Note that, in the present specification, the term "boiling point of the organic solvent" refers to a boiling point at 760 mmHg.

The organic solvent is not particularly limited. However, examples thereof include γ-butyrolactone (boiling point: 204°C), propylene carbonate (boiling point: 242°C), cyclohexanone (boiling point: 155.6°C), diethylene glycol dimethyl ether (boiling point: 162°C), and triethylene glycol dimethyl ether (boiling point: 216°C). Examples of other organic solvents include n-octane, m-xylene, solvent naphtha, diisobutyl ketone, 3-heptanone, 2-octanone, acetylacetone, butyl acetate, amyl acetate, n-hexyl acetate, n-octyl acetate, ethyl butyrate, ethyl valerate, ethyl caprylate, ethyl octoate, ethyl acetoacetate, ethyl 3-ethoxypropionate, diethyl oxalate, diethyl malonate, diethyl succinate, diethyl adipate, bis-2-ethylhexyl maleate, triacetin, tributyrin, propylene glycol monomethyl ether acetate, ethylene glycol monobutyl ether acetate, dibutyl ether, 1,2-dimethoxybenzene, 1,4-dimethoxybenzene, diethylene glycol monobutyl ether, diethylene glycol dimethyl ether, triethylene glycol dimethyl ether, 2-methoxy-1-methylethyl acetate, γ-butyrolactone, propylene carbonate, cyclohexanone, and butyl cellosolve. These may be used alone or in combination of two or more.

When the resin having the structural unit represented by the structural formula (1) is used, there is no particular limitation on the organic solvent used in combination. However, for example, it is preferable to use an organic solvent having at least one structure selected from the group consisting of an alkoxy group, an ether bond, and an ester bond, more preferable to use an organic solvent having an ether bond, and particularly preferable to use an alkylene glycol dialkyl ether. When these organic solvents are used, the solubility of the resin having the structural unit represented by the structural formula (1) is further improved.

Note that an "alkylene glycol dialkyl ether" is represented by $R^1$-(O-$R^2$)$_m$-O$R^3$. $R^1$ and $R^3$ are each independently an alkyl group having 1 to 5 carbon atoms, which may be linear or branched and preferably has 1 or 2 carbon atoms. $R^2$ is

an alkylene group having 2 to 5 carbon atoms, which may be linear or branched and more preferably has 2 or 3 carbon atoms. Finally, m represents an integer of 1 to 5, and is more preferably 2 or 3.

Specific examples of the alkylene glycol dialkyl ether include diethylene glycol dimethyl ether, triethylene glycol dimethyl ether, diethylene glycol ethyl methyl ether, and diethylene glycol butyl methyl ether. Of these, as the alkylene glycol dialkyl ether, diethylene glycol dimethyl ether and triethylene glycol dimethyl ether are preferable, and triethylene glycol dimethyl ether is more preferable.

When the resin having the structural unit represented by the structural formula (2) is used as the resin other than the high-acid-value compound, the organic solvent used in combination is preferably a polar solvent. Specifically, it is preferable to use at least one selected from a "component 1" which is a group consisting of a cyclic ester (lactone), a cyclic ketone, and an alkylene glycol monoalkyl ether, and more preferable to further use at least one selected from a "component 2" which is a group consisting of an alkylene glycol dialkyl ether, in addition to at least one selected from the "component 1". Using these organic solvents further improves the solubility of the resin having the structural unit represented by the structural formula (2). Note that, from the viewpoint of further improving the solubility of the resin having the structural unit represented by the structural formula (2), the "component 1" is preferably a group consisting of a cyclic ester (lactone) and a cyclic ketone. Specific examples of the organic solvent included in the "component 1", which is the group consisting of a cyclic ester (lactone), a cyclic ketone, and an alkylene glycol monoalkyl ether, include γ-butyrolactone, propylene carbonate, and cyclohexanone.

Specific examples of the organic solvent included in the "component 2", which is the group consisting of an alkylene glycol dialkyl ether, include diethylene glycol dimethyl ether, triethylene glycol dimethyl ether, diethylene glycol ethyl methyl ether, and diethylene glycol butyl methyl ether. Of these, the "component 2", which is the group consisting of an alkylene glycol dialkyl ether, is preferably diethylene glycol dimethyl ether and triethylene glycol dimethyl ether.

The "alkylene glycol monoalkyl ether" is represented by $R^4$-(O-$R^5$)$_n$-OH. $R^4$ is an alkyl group having 1 to 5 carbon atoms, which may be linear or branched. $R^5$ is an alkylene group having 2 to 5 carbon atoms, which may be linear or branched. Finally, n represents an integer of 1 to 5.

The content of the organic solvent is not particularly limited and can be selected as appropriate depending on the purpose. However, the content is preferably 60.0% by mass or more and 95.0% by mass or less, more preferably 70.0% by mass or more and 95.0% by mass or less, with respect to the total mass of the fabrication liquid. When the content is 60.0% by mass or more and 95.0% by mass or less, the solubility of the high-acid-value compound is further improved, and accordingly, the viscosity of the fabrication liquid can be further reduced. For example, this makes it possible to appropriately discharge the fabrication liquid using an inkjet method. Further, the fabrication liquid is prevented from being dried in the fabrication liquid application unit such as an inkjet head, making it possible to apply the fabrication liquid with the excellent discharge stability.

-Additive-

Depending on the purpose, the fabrication liquid may appropriately contain a surfactant, an anti-drying agent, a viscosity modifier, a penetrant, an antifoaming agent, a pH adjuster, an antiseptic agent, an anti-mold agent, a colorant, a preservative, a stabilizer, or the like.

-Method for producing fabrication liquid-

A method for producing the fabrication liquid is not particularly limited and can be selected as appropriate depending on the purpose. However, examples of the method include a method of mixing and stirring materials.

<Heating step>

A heating step is a step of heating the powder layer to which the fabrication liquid has been applied. This removes the organic solvent and the like included in the fabrication liquid, which remain in the powder layer. A solidified object can be formed by the heating step.

A heating temperature in the heating step is preferably a temperature equal to or lower the boiling point at 760 mmHg of the organic solvent. This makes it possible to volatilize and remove the organic solvent and the like remaining in the powder layer. If the organic solvent remains during the heating step, the strength of the solidified object may decrease.

The bending strength of the solidified object obtained in the heating step is not particularly limited. However, the bending strength is preferably 3.0 MPa or more, more preferably 4.0 MPa or more, still more preferably 5.0 MPa or more. When the bending strength of the solidified object is 3.0 MPa or more, the solidified object hardly breaks, making it possible to suitably produce the three-dimensional fabricated object precursor and the three-dimensional fabricated object having desired shapes. The higher the bending strength of the solidified object, the more preferable it is, and thus there is no particular limitation on a condition value of the bending strength.

The bending strength of the solidified object obtained by the heating step can be measured using a universal testing machine (Autograph, model AG-I, manufactured by Shimadzu Corp.) along with a 1 kN load cell and a 3-point bending jig. Further, the bending strength of the solidified object obtained by the heating step is the maximum stress at the breaking point determined by plotting the stress with respect to the strain under the condition that the distance of support span is set to 24 mm, and the load point is displaced at a rate of 1 mm/min.

<Degreasing step>

A degreasing step is a step of degreasing the powder layer to which the fabrication liquid has been applied. This makes it possible to obtain a degreased object of the three-dimensional fabricated object precursor, from which the organic compound and the like derived from the fabrication liquid have been removed. Note that, in the degreasing step, not only the organic material included in the three-dimensional fabricated object precursor is removed, but also a removal liquid may be evaporated and removed.

Examples of an atmosphere in which the degreasing step is performed include a vacuum atmosphere, an argon (Ar) atmosphere, a hydrogen ($H_2$) atmosphere, and a nitrogen ($N_2$) atmosphere.

It is preferable that the degreasing step includes raising the temperature from a temperature equal to or lower than the boiling point at 760 mmHg of the organic solvent to a temperature equal to or higher than the decomposition temperature of the organic material included in the powder layer, and further includes decomposing and removing the organic material by heating the three-dimensional fabricated object precursor for a predetermined period of time at a temperature that is equal to or higher than the thermal decomposition temperature of the organic material included in the powder layer and lower than the melting point or the solidus temperature of the material (metal) that constitutes the metal particles. More preferably, the degreasing step is performed at a temperature of 200°C or higher and 570°C or lower.

In the degreasing step, when the temperature is raised from the temperature equal to or lower than the boiling point at 760 mmHg of the organic solvent to the temperature equal to or higher than the decomposition temperature of the organic material included in the powder layer, at the beginning of the temperature rise (e.g., around 200°C, preferably 200°C±30°C), the high-acid-value compound is activated without being decomposed, making it possible to suitably thin or remove the oxide film on the surface of the metal particles. Then, in the degreasing step, when the temperature is raised from the temperature equal to or lower than the boiling point at 760 mmHg of the organic solvent to the temperature equal to or higher than the decomposition temperature of the organic material included in the powder layer, in the later stage of the temperature rise (e.g., 350°C or higher and 570°C or lower), the organic material in the high-acid-value compound is decomposed. This makes it possible to remove or reduce residues of the organic material derived from the high-acid-value compound, which otherwise inhibit the sintering, thus preventing the high-acid-value compound from inhibiting the sintering. As a result, the sintering density of the sintered object can be improved.

Specific examples of the organic material include a resin (binder component) other than the high-acid-value compound. Thus, in the degreasing step, the decomposition is preferably performed at a temperature higher than the thermal decomposition temperature of the resin other than the high-acid-value compound and lower than the melting point or the solidus temperature of the metal particles. It is possible to set multiple temperatures for heating and holding, depending on a component of the resin other than the high-acid-value compound to be used.

The solidus temperature can be selected as appropriate depending on the material constituting the metal particles. However, for example, the solidus temperature is approximately 570°C when AlSi10Mg particles are used.

The solidus temperature can be estimated by phase diagram calculation under the thermodynamic equilibrium.

A heating time in the degreasing step is not particularly limited. However, the heating time is preferably from 1 hour to 10 hours.

<Sintering step>

In a sintering step, the degreased powder layer is sintered. This makes it possible to obtain a sintered object.

The degreasing step and the sintering step may be performed continuously.

Specifically, the sintering step is a step in which the degreased object is heated for a certain period of time using a sintering unit at a temperature equal to or higher than the solidus temperature of the metal material constituting the metal particles and equal to or lower than the liquidus temperature, thereby forming the metal material constituting the metal particles into one piece.

More specifically, in the sintering step, the degreased three-dimensional fabricated object precursor is heated at a rate of 1°C/hour to 200°C/hour to a temperature between the liquidus temperature and the solidus temperature (the heating rate may be changed during this step) and then held at that temperature for about 1 to 10 hours. After the sintering step, the inside of the sintering device is cooled, and a shaped object is taken out.

The specific maximum reaching temperature in the sintering step is preferably a temperature at which 10% to 50% of the metal material becomes the liquid phase.

Examples of an atmosphere in which the sintering step is performed include a vacuum atmosphere, an argon (Ar) atmosphere, a hydrogen ($H_2$) atmosphere, and a nitrogen ($N_2$) atmosphere.
The liquidus temperature can be selected as appropriate depending on the material constituting the metal particles. However, for example, the liquidus temperature is approximately 600°C when AlSi10Mg particles are used.
The liquidus temperature can be estimated by phase diagram calculation under the thermodynamic equilibrium.
The sintered object has the high sintering density. In the present disclosure, the term "high sintering density" means that the relative density of the three-dimensional fabricated object (sintered object) is high with respect to the density of the metal material constituting the three-dimensional fabricated object (sintered object). The relative density of the three-dimensional fabricated object (sintered object) is preferably 93% or more, more preferably 97% or more.
Specifically, the relative density can be calculated using the following formula. Further, the density of the metal material and the density of the three-dimensional fabricated object (sintered object) can be measured, for example, with an automatic hydrometer (manufactured by Toyo Machine Manufacturing Co., Ltd.).

$$\text{Relative density (\%)} = \text{density of sintered object} / \text{density of metal material} \times 100$$

<Other steps>

Other steps are not particularly limited and can be selected as appropriate depending on the purpose. However, examples of other steps include a lamination step, an excess powder removal step, and a post-treatment step.

<<Lamination step>>

A lamination step is a step of forming the fabricated object by sequentially repeating the powder layer formation step and the fabrication liquid application step.
The lamination step includes the powder layer formation step and the fabrication liquid application step, thereby forming a region of the powder layer to which the fabrication liquid is applied. Further, the lamination step includes a step of laminating the powder on the powder layer having the region to which the fabrication liquid has been applied (powder layer formation step), and a step of applying the fabrication liquid onto the powder layer (fabrication liquid application step), thereby forming a region of the newly laminated powder layer to which the fabrication liquid is applied. Note that, during this step, the region of the uppermost laminated powder layer, to which the fabrication liquid has been applied, becomes continuous with the region of the powder layer located below, to which the fabrication liquid has been applied. As a result, a region to which the fabrication liquid has been applied is obtained with a thickness equivalent to two powder layers.

«Excess powder removal step»

An excess powder removal step is a step in which the excess powder adhering to the solidified object is removed to obtain the three-dimensional fabricated object precursor.
Further, the excess powder removal step preferably includes at least one step selected from the group consisting of a step of removing the excess powder from the solidified object by an excess powder removal unit such as air blowing and a step of removing the excess powder from the solidified object by immersing the solidified object in a removal liquid. The excess powder removal step more preferably includes both steps.
The solidified object after the heating step is in a state of being buried in the powder. When the solidified object is taken out from this buried state, the excess powder adheres to the surface and inside of the solidified object, and it is difficult to remove the excess powder in a simple manner. Further, this is even more difficult when the surface shape of the solidified object is complex or when the internal structure of the solidified object forms a channel-like shape. The fabricated object before sintering, fabricated by a general binder jetting method, does not have the high strength and thus has a risk of collapsing if the pressure of air blowing as a blowing unit is high. On the other hand, the solidified object formed using the fabrication liquid has improved the bending strength and thus has the strength that can withstand the pressure of air blowing. During this step, the strength of the solidified object is preferably 4.0 MPa or more, more preferably 5.0 MPa or more, still more preferably 6.0 MPa or more, in terms of the three-point bending stress. The higher the three-point bending stress, the more preferable it is. Thus, there is no particular limitation on a condition value of the bending strength.

-Removal liquid-

A removal liquid includes an organic solvent and, if necessary, other components. Note that, in order to distinguish between the organic solvent included in the fabrication liquid and the organic solvent included in the removal liquid, the organic solvent included in the fabrication liquid may be referred to as a "first organic solvent", and the organic

solvent included in the removal liquid may be referred to as a "second organic solvent".

Examples of the second organic solvent include a ketone, a halogen, an alcohol, an ester, an ether, a hydrocarbon, a glycol, a glycol ether, a glycol ester, a pyrrolidone, an amide, an amine, and a carbonate ester. These may be used alone or in combination of two or more.

Examples of the ketone include acetone, methyl ethyl ketone, diethyl ketone, methyl propyl ketone, methyl isobutyl ketone, methyl amyl ketone, cyclohexanone, isophorone, acetophenone, and diacetone alcohol.

Examples of the halogen include methylene chloride, trichloroethylene, perchlorethylene, HCFC141-b, HCFC-225, 1-bromopropane, chloroform, and ortho-dichlorobenzene.

Examples of the alcohol include methanol, ethanol, butanol, isobutanol, isopropyl alcohol, n-propyl alcohol, tertiary butanol, secondary butanol, 1,3-butanediol, 1,4-butanediol, 2-ethylhexanol, and benzyl alcohol.

Examples of the ester include methyl acetate, ethyl acetate, butyl acetate, isobutyl acetate, sec-butyl acetate, methoxybutyl acetate, 3-methoxybutyl acetate, 3-methoxy-3-methylbutyl acetate, ethyl-3-ethoxypropionate, amyl acetate, n-propyl acetate, isopropyl acetate, methyl lactate, ethyl lactate, butyl lactate, propylene glycol monomethyl ether acetate, propylene glycol monomethyl ether propionate, 3-ethoxy ethyl propionate, and dibasic acid ester (DBE).

Examples of the ether include dimethyl ether, ethyl methyl ether, diethyl ether, ethylene oxide, tetrahydrofuran, furan, benzofuran, diisopropyl ether, methyl cellosolve, ethyl cellosolve, butyl cellosolve, 1,4-dioxane, methyl tert-butyl ether (MTBE), ethylene glycol dimethyl ether, diethylene glycol dimethyl ether, ethylene glycol diethyl ether, diethylene glycol diethyl ether, triethylene glycol dimethyl ether, diethylene glycol dibutyl ether, dipropylene glycol dimethyl ether, and dipropylene glycol monomethyl ether.

Examples of the hydrocarbon include benzene, toluene, xylene, solvent naphtha, n-hexane, isohexane, cyclohexane, ethylcyclohexane, methylcyclohexane, cyclohexene, cycloheptane, cyclopentane, heptane, pentamethylbenzene, pentane, methylcyclopentane, n-heptane, isooctane, n-decane, n-pentane, isopentane, mineral spirit, dimethyl sulfoxide, and linear alkylbenzene.

Examples of the glycol include ethylene glycol, diethylene glycol, triethylene glycol, propylene glycol, and dimethoxytetraethylene glycol.

Examples of the glycol ester include ethylene glycol monoethyl ether acetate and diethylene glycol monobutyl ether acetate.

Examples of the glycol ether include Methyl CARBITOL, Ethyl CARBITOL, Butyl CARBITOL, and Methyl CARBITOL.

Examples of the pyrrolidone include 2-pyrrolidone, N-ethyl-2-pyrrolidone, and N-methyl-2-pyrrolidone.

Examples of the amide include dimethylformamide, dimethylacetamide, and formamide.

Examples of the amine include tetramethylethylenediamine, N,N-diisopropylethylamine, ethylenediamine, triethylamine, diethylamine, aniline, pyrrolidine, piperidine, morpholine, pyrrole, pyridine, pyridazine, oxazole, thiazole, and 1,3-dimethyl-2-imidazolidinone.

Examples of the carbonate ester include diethyl carbonate, dimethyl carbonate, propylene carbonate, and ethyl methyl carbonate.

The content of the second organic solvent in the removal liquid is not particularly limited. However, the content is preferably 90.0% by mass or more, more preferably 95.0% by mass or more. Note that the removal liquid may consist only of the second organic solvent.

Examples of other components in the removal liquid include an additive such as a surfactant, an antifoaming agent, an antiseptic/anti-mold agent, a pH adjuster, a chelating agent, or a rust preventive.

The content of other components in the removal liquid is not particularly limited and can be selected as appropriate depending on the purpose.

<<Post-treatment step>>

A post-treatment step is a step of performing a post-treatment to the sintered object.

The post-treatment is not particularly limited and can be selected as appropriate depending on the purpose. However, examples of the post-treatment include a surface protection treatment and painting.

The method for producing the three-dimensional fabricated object can be suitably performed by an apparatus for producing the three-dimensional fabricated object according to an embodiment of the present invention.

(Apparatus for producing three-dimensional fabricated object)

An apparatus for producing the three-dimensional fabricated object according to an embodiment of the present invention includes a powder layer formation unit for forming the powder layer containing the powder containing metal particles, and a fabrication liquid application unit of applying, to the powder layer, the fabrication liquid containing at least one high-acid-value compound with an acid value of 120 mgKOH/g or more, selected from the group consisting of a rosin

compound, a styrene compound, and an acrylic compound, and the organic solvent. The apparatus preferably further includes a heating unit, a degreasing unit, and a sintering unit, and if necessary, further includes other units.

The apparatus for producing the three-dimensional fabricated object according to an embodiment of the present invention can suitably perform the method for producing three-dimensional fabricated object according to an embodiment of the present invention. Thus, the powder layer formation unit, the fabrication liquid application unit, the heating unit, the degreasing unit, the sintering unit, and the other units can suitably perform the powder layer formation step, the fabrication liquid application process, the heating step, the degreasing step, the sintering step, and other steps, respectively. Therefore, detailed descriptions of these units are omitted.

<Powder layer formation unit>

The powder layer formation unit is a unit for forming the powder layer containing the powder containing metal particles.

Examples of the powder layer formation unit include a counter rotation mechanism (counter roller), a brush, a roller, a blade, and a pressing member.

The powder may be stored in a powder storage unit. The powder storage unit is a member such as a container in which the powder is stored, and examples thereof include a storage chamber, a bag, a cartridge, and a tank.

<Fabrication liquid application unit>

The fabrication liquid application unit is a unit for applying, to the powder layer, the fabrication liquid containing at least one high-acid-value compound with an acid value of 120 mgKOH/g or more, selected from the group consisting of a rosin compound, a styrene compound, and an acrylic compound, and the organic solvent.

When the inkjet method is used as a method for discharging the fabrication liquid, the fabrication liquid application unit that applies the fabrication liquid by discharging is an inkjet head having a nozzle for discharging the fabrication liquid.

The fabrication liquid supplied to the fabrication liquid application means may be stored in a fabrication liquid storage unit. The fabrication liquid storage unit is a member such as a container in which the fabrication liquid is stored, and examples thereof include a storage chamber, a bag, a cartridge, and a tank.

<Heating unit>

A heating unit is a unit for heating the powder layer to which the fabrication liquid has been applied.

Examples of the heating unit include a known dryer and a known constant temperature and humidity chamber.

<Degreasing unit>

A degreasing unit is a unit for degreasing the powder layer to which the fabrication liquid has been applied.

Examples of the degreasing unit include a known sintering device and a known electric furnace.

<Sintering unit>

A sintering unit is a unit for sintering the degreased powder layer.

Examples of the sintering unit include a known sintering device. However, the sintering unit may be the same as the degreasing unit.

Here, examples of the method for producing the three-dimensional fabricated object according to an embodiment of the present invention and the apparatus for producing the three-dimensional fabricated object according to an embodiment of the present invention are described in detail with reference to the drawings. Note that, in each drawing, the same components are designated by the same reference numerals, and redundant description thereof may be omitted. Further, the number, position, shape, and the like of the following constituent members are not limited to those of the present embodiments, and can be set to the preferable number, position, shape, and the like for implementing embodiments of the present invention.

[Examples of method for producing fabricated object]

FIG. 1 is a schematic diagram of a fabrication device 100 according to one embodiment of the present invention.

The fabrication device 100 includes a powder layer fabrication unit 1 and a fabrication liquid application unit 5. The powder layer fabrication unit 1 fabricates a powder layer 31 containing a powder 20. The fabrication liquid application unit 5 applies a fabrication liquid 10 to the powder layer 31 to form a fabrication layer 30. The fabrication device 100

fabricates a fabricated object by laminating a plurality of the fabrication layers 30.

The powder layer fabrication unit 1 includes a powder chamber 11 and a lamination unit 16. The powder chamber 11 includes a supply chamber 21, a fabrication chamber 22, a supply stage 23, a fabrication stage 24, and an excess powder chamber 25. The powder chamber 11 has a box shape. Three upper surfaces of the supply chamber 21, the fabrication chamber 22, and the excess powder chamber 25 are open. The lamination unit 16 includes a flattening unit 12 and a powder removal unit 13.

The supply chamber 21 is a chamber for supplying the powder 20 to the fabrication chamber 22. Further, the supply chamber 21 holds the powder 20 to be supplied to the fabrication chamber 22. The supply stage 23 is provided at the bottom of the supply chamber 21. The supply stage 23 moves up and down in the vertical direction (Z direction). The side surface of the supply stage 23 is disposed so as to be in contact with the inner surface of the supply chamber 21.

The fabrication chamber 22 is supplied with the powder 20 necessary for fabrication from the supply chamber 21. In the fabrication chamber 22, the powder layer 31 and the fabrication layer 30 are formed. Further, in the fabrication chamber 22, a plurality of the fabrication layers 30 are laminated to fabricate a fabricated object.

The supply stage 23 and the fabrication stage 24 are provided at the bottoms of the supply chamber 21 and the fabrication chamber 22, respectively, and are moved up and down in the vertical direction (Z direction). The side surface of the fabrication stage 24 is disposed so as to be in contact with the inner surface of the fabrication chamber 22. The upper surfaces of the supply stage 23 and the fabrication stage 24 are kept horizontal.

The excess powder chamber 25 is a chamber for holding the excess powder 20 among the powder 20 flattened by the flattening unit 12 during the formation of the powder layer 31. A unit for sucking the powder 20 may be provided at the bottom of the excess powder chamber 25, or a unit for removing the excess powder chamber 25 may be provided. The excess powder chamber 25 is placed next to the fabrication chamber 22. The excess powder 20 held in the excess powder chamber 25 may be returned to the supply chamber 21 or may be returned to the supply chamber 21 via a powder supply device. The powder supply device may be disposed above the supply chamber 21. The powder supply device supplies the powder 20 to the supply chamber 21 before start of the fabrication or when the amount of the powder 20 in the supply chamber 21 is low. Note that, although the powder chamber 11 is configured by two chambers, the supply chamber 21 and the fabrication chamber 22, the powder chamber 11 may be configured only by the fabrication chamber 22, and the powder may be supplied to the fabrication chamber 22 from the powder supply device.

Examples of a method for transporting the powder 20 from the powder supply device to the supply chamber 21 include a screw conveyor method using a screw and a pneumatic transport method using air.

The flattening unit 12 flattens the fabrication layer 30 and the powder layer 31. The flattening unit 12 flattens the fabrication layer 30 by rotating a recoater as a rotating body. The flattening unit 12 is rotationally driven so that the powder 20 of the supply stage 23 of the supply chamber 21 is supplied to the fabrication chamber 22 to form the powder layer 31. The flattening unit 12 reciprocates in the Y direction along the stage surface of the fabrication stage 24 (the surface on which the powder 20 is laminated). More specifically, the flattening unit 12 moves horizontally from the outside of the supply chamber 21 so as to pass over the supply chamber 21 and the fabrication chamber 22. In this manner, the powder 20 is transferred and supplied onto the fabrication chamber 22, and the flattening unit 12 flattens the powder 20 while passing over the fabrication chamber 22 to form the powder layer 31. The flattening unit 12 is a member longer than the inner dimensions of the fabrication chamber 22 and the supply chamber 21. Note that a blade or a bar may be used as a plate-like member of the flattening unit 12.

A powder removal unit 13 removes the powder adhering to the flattening unit 12. The powder removal unit 13 moves together with the flattening unit 12 in a state of being in contact with the peripheral surface of the flattening unit 12.

The fabrication liquid application unit 5 includes a carriage 51 and a head 52. The head 52 applies the fabrication liquid 10 to the powder layer 31. The head 52 is, for example, an inkjet head, and has a nozzle array in which a plurality of nozzles are arranged. A cyan fabrication liquid, a magenta fabrication liquid, a yellow fabrication liquid, and a black fabrication liquid may be applied to form a colored fabricated object. Alternatively, each of the one-color fabrication liquids may be applied from the plurality of nozzles. A method of applying the fabrication liquid may be an inkjet method or a dispenser method. At least one head 52 is mounted on the carriage 51, and is reciprocally moved in X (main scanning), Y (sub-scanning), and Z directions by a motor, a guide member, and the like.

Next, one example of the method for producing the three-dimensional fabricated object (a flow of fabrication) according to an embodiment of the present invention is described in more detail with reference to FIGS. 2A to 2E. FIGS. 2A to 2E are schematic diagrams illustrating examples of the operation of the fabrication device 100 according to one embodiment of the present invention. Note that the configuration of the fabrication device 100 according to one embodiment of the present invention illustrated in FIGS. 2A to 2E are the same as that of the fabrication device 100 according to one embodiment of the present invention in FIG. 1.

First, a state in which the first fabrication layer 30 is formed on the fabrication stage of the fabrication chamber is described. When the next powder layer is formed on the first fabrication layer 30, as illustrated in FIG. 2A, the supply stage 23 of the supply chamber 21 is raised, and the fabrication stage 24 of the fabrication chamber 22 is lowered.

During this process, a descending distance of the fabrication stage 24 is set so that a distance (lamination pitch)

between the upper surface of the first fabrication layer 30 in the fabrication chamber 22 and a lower part (lower tangent part) of the flattening unit 12 is $\Delta t1$.

In one example of the method for producing the three-dimensional fabricated object according to an embodiment of the present invention, the flattening unit 12 is disposed so as to form a gap with respect to upper end surfaces of the supply chamber 21 and the fabrication chamber 22. Thus, when the powder 20 is transferred and supplied to the fabrication chamber 22 and flattened, the lower surface of the flattening unit 12 is at a higher position than the upper end surfaces of the supply chamber 21 and the fabrication chamber 22. This makes it possible to reliably prevent the flattening unit 12 from contacting the upper end surfaces of the supply chamber 21 and the fabrication chamber 22, thereby reducing damage to the flattening unit 12. The damaged surface of the flattening unit 12 causes a streak on the surface of the powder layer 31 (see FIG. 2D) supplied to the fabrication chamber 22, which tends to reduce the flatness.

Next, as illustrated in FIG. 2B, the flattening unit 12 moves the powder 20 toward the fabrication chamber 22 side while rotating in the direction of an arrow, thereby transferring and supplying the powder 20 placed at a higher position than the upper end surface of the supply chamber 21 to the fabrication chamber 22 (powder supply). Further, as illustrated in FIG. 2C, the flattening unit 12 is moved parallel to the stage surface of the fabrication stage 24 of the fabrication chamber 22, thereby forming the powder layer 31 having a predetermined thickness $\Delta t1$ on the fabrication stage 24 of the fabrication chamber 22(flattening). During this process, the excess powder 20 that is not used to form the powder layer 31 falls into the excess powder chamber 25. After the powder layer 31 is formed, the flattening unit 12 is moved toward the supply chamber 21 side and returned (carried back) to the initial position (original position), as illustrated in FIG. 2D.

During this process, the flattening unit 12 is movable while keeping a constant distance from the upper end surfaces of the fabrication chamber 22 and the supply chamber 21. The flattening unit 12 movable with such a constant distance can form the powder layer 31 with a uniform thickness h (corresponding to the lamination pitch $\Delta t1$) on the fabrication chamber 22 or on the already formed fabrication layer 30 by transporting the powder 20 onto the fabrication chamber 22. Note that, hereinafter, the thickness h of the powder layer 31 and the lamination pitch $\Delta t1$ may be described without distinction. Unless otherwise specified, they have the same thickness and the same meaning. Further, the thickness h of the powder layer 31 may be determined by actual measurement. In this case, the average value at a plurality of locations is preferably used as the thickness h.

Then, as illustrated in FIG. 2E, droplets of the fabrication liquid 10 are discharged from the head 52 of the liquid discharge unit, thereby laminating and forming the fabrication layer 30 with a desired shape on the second powder layer 31. Next, the new fabrication layer 30 is formed and laminated by repeating the powder layer formation step and the fabrication liquid application step.

During this process, the new fabrication layer 30 and the underlying fabrication layer 30 are integrated into one unit. Thereafter, the powder layer formation step and the fabrication liquid application step are further repeated to complete a laminated obj ect.

FIG. 3 is a schematic diagram illustrating a fabrication system of the three-dimensional fabricated object according to one embodiment of the present invention.

A fabrication system 500 according to one embodiment of the present invention includes a fabrication device 100, a heating device 200, an excess powder removal device 300, and a sintering device 400. The fabrication device 100 fabricates a fabricated object. The heating device 200 heats the fabricated object fabricated by the fabrication device 100. The excess powder removal device 300 removes the excess powder adhering to the fabricated object heated by the heating device 200. As the excess powder removal device 300, for example, an air blower can be used. The sintering device 400 sinters the fabricated object from which the excess powder has been removed. The fabricated object may be degreased before being sintered by the sintering device 400. The fabrication system 500 may be configured by four separate devices, the fabrication device 100, the heating device 200, the excess powder removal device 300, and the sintering device 400, may be configured by one device in which the four devices are integrated into one unit, or may be configured such that some functions are installed in the fabrication device 100 or the sintering device 400. Further, at least some functions of the heating device 200 or the excess powder removal device 300 may be omitted as appropriate.

FIG. 4 is a flowchart of the method for producing the three-dimensional fabricated object according to one embodiment of the present invention.

First, in S1, the fabrication device 100 forms the powder layer containing the powder. Next, in S2, the fabrication device 100 applies the fabrication liquid to the powder layer. In S3, the fabrication device 100 forms the fabricated object by sequentially repeating the formation of the powder layer and the application of the fabrication liquid. Next, in S4, the heating device 200 heats the fabricated object formed in S3. In S5, the excess powder removal device 300 removes the excess powder of the fabricated object heated in S4 to obtain a shaped object. Then, in S6, the sintering device 400 degreases the shaped object obtained in S5. Finally, in S7, the sintering device 400 sinters the degreased object.

(Three-dimensional fabricated object)

The three-dimensional fabricated object according to an embodiment of the present invention is produced by the

method for producing the three-dimensional fabricated object according to an embodiment of the present invention or the apparatus for producing three-dimensional fabricated object according to an embodiment of the present invention. Thus, the three-dimensional fabricated object according to an embodiment of the present invention has the high sintering density.

The use of the three-dimensional fabricated object is not particularly limited and can be selected as appropriate depending on the purpose. However, for example, the three-dimensional fabricated object can be suitably used as meters and operation panels for automobiles, OA equipment, electrical equipment, electronic equipment, cameras, and the like, various components, daily necessities, prototypes, and the like.

(Fabrication liquid for producing three-dimensional fabricated object)

The fabrication liquid for producing the three-dimensional fabricated object according to an embodiment of the present invention is applied to the powder layer containing the powder containing metal particles, and includes at least one high-acid-value compound with an acid value of 120 mgKOH/g or more, selected from the group consisting of a rosin compound, a styrene compound, and an acrylic compound, and the organic solvent. The fabrication liquid further contains other components as necessary.

All components contained in the fabrication liquid for producing the three-dimensional fabricated object according to an embodiment of the present invention are the same as those described in the <Fabrication liquid>> section of (Method for producing three-dimensional fabricated object). Thus, detailed description thereof is omitted.

The three-dimensional fabricated object obtained by using the fabrication liquid for producing the three-dimensional fabricated object has high sintering density and high strength.

(Kit for producing three-dimensional fabricated object)

A kit for producing the three-dimensional fabricated object according to an embodiment of the present invention includes the fabrication liquid for producing the three-dimensional fabricated object according to an embodiment of the present invention and the powder containing metal particles. The kit may further include other components such as a removal liquid as necessary.

In the kit for producing the three-dimensional fabricated object, the fabrication liquid for producing the three-dimensional fabricated object, the powder containing metal particles, and other components may be provided as an integrated unit or may be provided separately. For example, a storage unit for the fabrication liquid for producing the three-dimensional fabricated object, in which the fabrication liquid for producing the three-dimensional fabricated object is stored, and a powder storage unit, in which the powder containing metal particles is stored, may be integrated into one unit.

Even when the fabrication liquid for producing the three-dimensional fabricated object, the powder containing the metal particle, and other components are stored in separate storage units, the kit for producing the three-dimensional fabricated object according to an embodiment of the present invention still includes a case where it is assumed that the fabrication liquid for producing the three-dimensional fabricated object, the powder containing metal particles, and other components as necessary are used together, a case where it is practically guided that the fabrication liquid for producing the three-dimensional fabricated object, the powder containing metal particles, and other components as necessary are used together, and the like.

[Example]

Embodiments of the present invention are specifically described below with reference to Examples and Comparative examples. However, embodiments of the present invention are not limited to these Examples and Comparative examples.

(Example 1)

<Preparation of fabrication liquid>

The materials presented in Table 1 below were stirred with a magnetic stirrer for 4 hours while being heated at 70°C. After stirring for 4 hours, heating was stopped while stirring was continued until the temperature reached room temperature (25±5°C), thereby preparing a fabrication liquid of Example 1. Note that the content of each material in Table 1 below is indicated by mass%.

<Production of three-dimensional fabricated object>

Using AlSilMg (manufactured Toyo Aluminium K.K., Si1MgBB) as the powder containing metal particles and the prepared fabrication liquid, two types of three-dimensional fabricated object precursors, a rectangular shape pattern with a length of 40 mm, width of 10 mm, and thickness of 3 mm (hereinafter also referred to as a "short sample") and a rectangular shape pattern with a length of 100 mm, width of 10 mm, and thickness of 3 mm (hereinafter also referred to as a "long sample"), were produced as follows.

<<Powder layer formation step>>

Using the fabrication device 100 according to one embodiment of the present invention illustrated in FIG. 1, the powder 20 containing the metal particles was transferred from the supply chamber 21 to the fabrication chamber 22, and the powder layer containing the powder containing metal particles with an average thickness of 100 μm was formed on the fabrication stage 24.

<<Fabrication liquid application step>>

The fabrication liquid 10 was applied (discharged) from a nozzle of the head 52 with the known inkjet method onto the surface of the powder layer containing the powder containing metal particles formed in the powder layer formation step. During this process, a discharge area of the fabrication liquid 10 was set to have a shape with a length of 40 mm and width of 10 mm for the short sample, or a shape with a length of 100 mm and width of 10 mm for the long sample, thereby forming the fabrication layer 30.

<<Lamination step>>

The powder layer formation step and the fabrication liquid application step were repeated until the fabrication layer 30 had a predetermined total average thickness of 3 mm, thereby obtaining a fabricated object.

<<Heating step and excess powder removal step>>

The fabricated object obtained in the lamination step was vacuum-dried using the heating device 200 at a temperature equal to or lower than the boiling point at 760 mmHg of the organic solvent to obtain a solidified object. The excess powder was removed from the solidified object after drying using the excess powder removal device 300, thereby obtaining a three-dimensional fabricated object precursor.

<<Degreasing step>>

The three-dimensional fabricated object precursor obtained in the heating step was heated in the sintering device 400 at a temperature equal to or lower than the solidus temperature (approximately 570°C) of the metal material constituting the metal particles to obtain a degreased object.

<<Sintering step>>

The degreased object obtained in the degreasing step was heated in the sintering device 400 at a temperature equal to or higher than the solidus temperature (approximately 570°C) and equal to or lower than the liquidus temperature (approximately 600°C) of the metal material constituting the metal particles to obtain a three-dimensional fabricated object as a sintered object.

(Examples 2 to 8 and Comparative examples 1 to 7)

The fabrication liquids were prepared, and the three-dimensional fabricated objects were produced with the same methods as in Example 1, except that in <Preparation of fabrication liquid> of Example 1, the materials were changed as presented in Table 1 below or Table 2 below, thereby obtaining the fabrication liquids, the three-dimensional fabrication precursors, and the three-dimensional fabricated objects of Examples 2 to 8 and Comparative examples 1 to 7.

[Evaluation]

For the fabrication liquids, the three-dimensional fabrication precursors, or the three-dimensional fabricated

objects obtained in Examples 1 to 8 and Comparative Examples 1 to 7, the following methods were used to measure or evaluate the "viscosity of fabrication liquid", the "glass transition temperature (Tg) of high-acid-value compound", the "bending strength of three-dimensional fabricated object precursor", the "deflection of three-dimensional fabricated object precursor under high temperature and high humidity", and the "relative density of three-dimensional fabricated object (sintered object)". The measurement results and evaluation results are presented in Table 1 below and Table 2 below.

<<Measurement of viscosity of fabrication liquid>>

The fabrication liquid was measured using a cone-plate rotational viscometer (VISCOMETER TVE-22L, manufactured by Tokisangyo). Note that the temperature inside the measurement container was kept at 25°C using a high-temperature circulation chamber, and a cone rotor (1°34' × R24) was used as a rotor.

<<Measurement of glass transition temperature (Tg) of high-acid-value compound>>

One gram of the fabrication liquid was measured into an aluminum cup and heated on a hot stirrer at 150°C for 6 hours to obtain a dried product. A part of the dried product was scraped off from the aluminum cup, and measured with a differential scanning calorimetry (DSC) device (DSC2500, manufactured by TA Instruments Japan Inc.) using a profile that involved heating and cooling a total of four times. Specifically, in a range from -30°C to 200°C, heating to 200°C (first time), cooling to -30°C (second time), heating to 200°C (third time), and cooling to -30°C (fourth time) were performed, and data at the third temperature increase was taken as the glass transition temperature (Tg) of the high-acid-value compound, and evaluated based on the following evaluation criteria.

[Evaluation criteria]

A: Tg of 60°C or higher
B: Tg of 50°C or higher and lower than 60°C
C: Tg of 45°C or higher and lower than 50°C
D: Tg of lower than 45°C

<<Bending strength of three-dimensional fabricated object precursor>>

The bending strength of the solidified object obtained in the heating step and the excess powder removal step was measured and evaluated based on the following evaluation criteria. For measuring the bending strength of the three-dimensional fabricated object precursor, the three-dimensional fabricated object precursor (short sample) with a length of 40 mm, width of 10 mm, and thickness of 3 mm was used. The measurement was performed using a universal testing machine (Autograph, model AG-I, manufactured by Shimadzu Corp.) along with a 1 kN load cell and a three-point bending jig. Further, the stress was plotted against the strain under the condition that the distance of support span was set to 24 mm, and the load point was displaced at a rate of 1 mm/min, and the stress at the break point was taken as the maximum stress.

[Evaluation criteria]

A: Bending strength of 5.0 MPa or more
B: Bending strength of 4.0 MPa or more and less than 5.0 MPa
C: Bending strength of 3.0 MPa or more and less than 4.0 MPa
D: Bending strength of less than 3.0 MPa

«Deflection of three-dimensional fabricated object precursor under high temperature and humidity»

The three-dimensional fabricated object precursor (long sample) with a length of 100 mm, width of 10 mm, and thickness of 3 mm was stored in a small environmental testing chamber (SH-222, manufactured by Espec Corp.) in a state of being supported at both ends at units 5 mm away from both ends to examine whether deflection occurred in the center of the three-dimensional fabricated object precursor (sagging near the center). The amount of deflection was determined by placing a straight stainless-steel scale on the three-dimensional fabricated object precursor and examining whether there was a gap between the three-dimensional fabricated object precursor and the straight stainless-steel scale at the center of

the three-dimensional fabricated object precursor. Further, it was also examined whether there was any deformation (shape change other than deflection) in the three-dimensional fabricated object precursor in addition to the amount of deflection. The temperature and humidity inside the small environmental test chamber were kept constant at 40°C and 60%, respectively, during the operation, and the deflection and the deformation were examined by taking out the samples after 1 day, 2 weeks, 4 weeks, and 5 weeks of storage. The occurrence of the deflection or the deformation in the center of the three-dimensional fabricated object precursor was evaluated based on the following criteria, and then the observation was completed.

[Evaluation criteria]

A: No deflection or deformation for 4 weeks or more
B: No deflection or deformation for 2 weeks or more and 4 weeks or less
C: Deformation occurs for 2 weeks or less

«Relative density of three-dimensional fabricated object (sintered object)»

The density of the AlSi1Mg powder containing metal particles before the powder layer formation step and the density of the three-dimensional fabricated object (sintered object) were measured with an automatic hydrometer (manufactured by Toyo Machine Manufacturing Co., Ltd.).

The relative density of the three-dimensional fabricated object (sintered object) with respect to the density of the metal material constituting the three-dimensional fabricated object (sintered object) was calculated by the following formula, and evaluated based on the following evaluation criteria.

$$\text{Relative density (\%)} = \text{density of sintered object/density of AlSi1Mg} \times 100$$

[Evaluation criteria]

A: Relative density of 97% or more
B: Relative density of 93% or more and less than 97%
C: Relative density of less than 93%

Table 1

| Material name | | Material acid value [mgKOH/g] | Material Tg (°C) | Examples | | | | | | | |
|---|---|---|---|---|---|---|---|---|---|---|---|
| | | | | 1 | 2 | 3 | 4 | 5 | 6 | 7 | 8 |
| Organic solvent | Triglyme (triethylene glycol dimethyl ether) | - | - | 52.0 | 52.0 | 52.0 | 52.0 | 52.0 | 60.4 | 60.4 | 60.4 |
| | Terpineol C | - | - | 34.9 | 34.9 | 34.9 | 34.9 | 34.9 | 26.5 | 26.5 | 26.5 |
| Resin | JMR-10LL (Polyvinyl acetate, saponification degree 10 mol%) | - | 40 | 8.0 | 8.0 | 8.0 | 8.0 | 8.0 | - | - | - |
| High acid value rosin compound | PINECRYSTAL KR-120 (acid-modified ultra pale colored rosin) | 305 - 345 | 110-130 | 5.0 | - | - | - | - | - | - | - |
| | PINECRYSTAL KE-604 (acid-modified ultra pale colored rosin) | 230 - 24; | 124 - 134 | - | 5.0 | - | - | - | - | - | - |
| | PINECRYSTAL KR-140 (ultra pale colored polymerized rosin) | 130 -160 | 130-160 | - | - | 5.0 | - | - | - | - | - |
| | TESPOL 1150 (rosin modified maleic acid resin) | 120-130 | 100 - 110 | - | - | - | 5.0 | - | - | - | - |
| | TESPOL 1158 (rosin modified maleic acid resin) | 270 - 300 | 100 - 110 | - | - | - | - | 5.0 | - | - | - |
| High acid value resin | HS-2190 (styrene acrylic resin) | 200 | S6 | - | - | - | - | - | 13.0 | - | - |
| | X-200 (styrene maleic acid resin) | 190 | S3 | - | - | - | - | - | - | 13.0 | - |
| | RS-1190 (acrylic resin) | 150 | 73 | - | - | - | - | - | - | - | 13.0 |
| Surfactant.'additice | SURFLON KF-353 | - | - | 0.1 | 0.1 | 0.1 | 0.1 | 0.1 | 0.1 | 0.1 | 0.1 |
| Total (mass%) | | | | 100.0 | 100.0 | 100.0 | 100.0 | 100.0 | 100.0 | 100.0 | 100.0 |
| Modeling liquid | Viscosity at 25°C [mP·s] | | | 18 | 18 | 19 | 18 | 20 | 17 | 11 | 16 |
| | Tg of dried product | Evaluation result | | B | B | A | B | B | A | A | A |
| | | Tg [°C] | | 54 | 58 | 61 | 50 | 51 | 85 | 81 | 70 |
| Three-dimensional modeled object precursor | Bending strength | Evaluation result | | B | B | B | B | B | B | A | A |
| | | Bending strength [Mpa] | | 4.3 | 4.5 | 4.3 | 4.0 | 4.2 | 4.1 | 5.6 | 5.0 |
| | Deflection under high temperature and humidity (40°C, humidity 60%) | Evaluation result | | A | A | A | A | A | A | A | A |

(continued)

| Material name | | Material acid value [mgKOH/g] | Material Tg (°C) | Examples | | | | | | | |
|---|---|---|---|---|---|---|---|---|---|---|---|
| | | | | 1 | 2 | 3 | 4 | 5 | 6 | 7 | 8 |
| Three-dimensional modeled object (sintered object) | Relative density | Evaluation result | | A | A | A | A | A | A | A | A |
| | | Calculation value [%] | | 97 | 98 | 98 | 98 | 97 | 98 | 98 | 98 |

Table 2

| Material name | | Material acid value [mgKOH/g] | Material Tg (°C) | Comparative examples | | | | | | |
|---|---|---|---|---|---|---|---|---|---|---|
| | | | | 1 | 2 | 3 | 4 | 5 | 6 | 7 |
| Organic solvent | Triglyme (triethylene glycol dimethyl ether) | - | - | 86.9 | 52.0 | 52.0 | 52.0 | 60.4 | 60.4 | 86.9 |
| | Terpineol C | - | - | - | 34.9 | 34.9 | 34.9 | 26.5 | 26.5 | - |
| Resin | JMR-10LL (polyvinyl acetate, saponification degree 10 mol%) | - | 40 | 13.0 | 8.0 | 8.0 | 8.0 | - | - | - |
| Low acid value rosin compound | PENSEL D-135 (polymerized rosin ester) | ≤20 | 75 | - | 5.0 | - | - | - | - | - |
| | TAMANOL 135 (rosin modified phenolic resin) | 0.1 - 18 | 88 | - | - | 5.0 | - | - | - | - |
| Low acid value resin | YS RESIN SX100 (styrene resin) | - | 50 | - | - | - | 5.0 | - | - | - |
| | US-1071 (styrene acrylic resin) | 75 | 100 | - | - | - | - | 13.0 | - | - |
| | VS-1063 (styrene acrylic resin) | 0 | - | - | - | - | - | - | 13.0 | - |
| High acid value fatty acid | Stearic acid 750V | 200 | - | - | - | - | - | - | - | 13.0 |
| Surfactant additive | SURFLON KF-353 | - | - | 0.1 | 0.1 | 0.1 | 0.1 | 0.1 | 0.1 | 0.1 |
| Total (mass%) | | | | 100.0 | 100.0 | 100.0 | 100.0 | 100.0 | 100.0 | 100.0 |
| Modeling liquid | Viscosity at 25°C [mPa·s ] | | | 18 | 16 | 16 | 17 | 13 | 12 | 6 |
| | Tg of dried product | Evaluation result | | D | B | B | C | A | A | - |
| | | Tg [°C] | | 39 | 50 | 53 | 46 | 99 | 102 | - |
| Three-dimensional modeled object precursor | Bending strength | Evaluation result | | A | B | B | B | C | D | - |
| | | Bending strength [Mpa] | | 5.7 | 4.2 | 4.3 | 4.4 | 3.5 | 2.9 | - |
| | Deflection under high temperature and humidity (40°C, humidity 60%) | Evaluation result | | C | B | B | B | B | B | - |

(continued)

| Material name | | Material acid value [mgKOH/g] | Material Tg (°C) | Comparative examples | | | | | | |
|---|---|---|---|---|---|---|---|---|---|---|
| | | | | 1 | 2 | 3 | 4 | 5 | 6 | 7 |
| Three-dimensional modeled object (sintered object) | Relative density | Evaluation result | | C | B | B | B | B | B | - |
| | | Calculation value [%] | | 91 | 93 | 95 | 94 | 96 | 94 | - |

In Examples 1 to 8, when the fabrication liquid included at least one high-acid-value compound with an acid value of 120 mgKOH/g or more, selected from the group consisting of a rosin compound, a styrene compound, and an acrylic compound, the high sintering density was achieved using an aluminum alloy with a low Si content, such as AlSi1Mg. Further, these high-acid-value compounds could provide the three-dimensional fabricated object precursors with sufficient strength.

In Comparative example 1, when the fabrication liquid did not include the high-acid-value compound having an acid value of 120 mg KOH/g or more, the sintering density was low with the aluminum alloy such as AlSi1Mg.

In Comparative examples 2 and 3, the rosin compound having the low acid value of less than 120 mgKOH/g caused the lower sintering density than the rosin compound having the high acid value of 120 mgKOH/g or more.

Similarly, in Comparative examples 4, 5, and 6, the styrene-acrylic resin or the styrene resin having the low acid value of less than 120 mgKOH/g caused the lower sintering density than the styrene compound or the acrylic compound having the high acid value of 120 mgKOH/g or more.

In Comparative example 7, the fatty acid used as a high-acid-value compound having an acid value of 120 mgKOH/g or more could not achieve the sufficient strength of the three-dimensional fabricated object precursor, making it difficult to produce the three-dimensional fabricated object precursor. Thus, the fatty acid with the high acid value was not suitable for the binder jetting method. Like the styrene-maleic acid resin with an acid value of 120 mgKOH/g or more, the component alone is required to provide the sufficient strength.

Aspects of the present invention include the following.

Aspect 1

A method for producing a three-dimensional fabricated object including:

forming a powder layer containing a powder containing metal particles; and
applying, to the powder layer, a fabrication liquid containing an organic solvent and at least one high-acid-value compound with an acid value of 120 mgKOH/g or more, selected from the group consisting of a rosin compound, a styrene compound, and an acrylic compound.

Aspect 2

The method according to the above Aspect 1, in which the high-acid-value compound comprises at least one selected from the group consisting of an acid-modified rosin, a polymerized rosin, a hydrogenated rosin, a rosin-modified maleic acid resin, a formylated rosin, a fumarated rosin, a rosin-modified alkyd resin, an acrylated rosin resin, a styrene acrylic resin, a styrene maleic acid resin, and an acrylic resin.

Aspect 3

The method according to the above Aspect 1 or 2, in which the fabrication liquid contains the rosin compound and further contains a resin having a structural unit represented by the following structural formula (1).

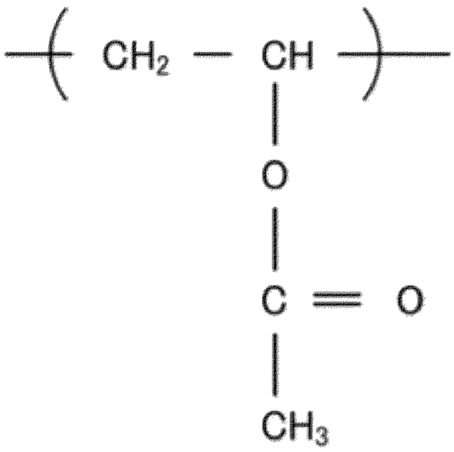

... Structural Formula (1)

Aspect 4

The method according to any of the above Aspects 1 to 3, in which the metal particles include at least one selected from the group consisting of particles made of a pure metal and particles made of an alloy.

Aspect 5

The method according to any of the above Aspects 1 to 4, in which the metal particles contain aluminum.

Aspect 6

The method according to the above Aspect 5, in which the metal particles further contain at least one selected from the group consisting of silicon and magnesium.

Aspect 7

The method according to any of the above Aspects 1 to 6, further including:
heating the powder layer to which the fabrication liquid has been applied, at a temperature equal to or lower than a boiling point at 760 mmHg of the organic solvent.

Aspect 8

The method according to the above Aspect 7, further including:
degreasing the powder layer to which the fabrication liquid has been applied, in which the degreasing includes:
increasing temperature from the temperature equal to or lower than the boiling point at 760 mmHg of the organic solvent to a temperature equal to or higher than a decomposition temperature of an organic material included in the powder layer.

Aspect 9

The method according to the above Aspect 8, in which the degreasing is performed at 200°C or higher and 570°C or lower.

Aspect 10

The method according to the above Aspect 9, further including sintering the degreased powder layer.

Aspect 11

A fabrication liquid for producing a three-dimensional fabricated object, to be applied to a powder layer containing a powder containing metal particles, in which the fabrication liquid comprises:

at least one high-acid-value compound with an acid value of 120 mgKOH/g or more, selected from the group

consisting of a rosin compound, a styrene compound, and an acrylic compound; and
an organic solvent.

Aspect 12

The fabrication liquid according to the above Aspect 11, in which the fabrication liquid has a viscosity of 5 mPa·s or more and 50 mPa·s or less at 25°C.

Aspect 13

The fabrication liquid according to the above Aspect 11 or 12, in which the fabrication liquid has a surface tension of 40 mN/m or less at 25°C.

Aspect 14

The fabrication liquid according to any of the above Aspects 11 to 13, in which the high-acid-value compound has a glass transition temperature of 45°C or higher.

Aspect 15

The fabrication liquid according to any of the above Aspects 11 to 14, in which the organic solvent has a viscosity of 5 mPa·s or more and 50 mPa·s or less at 25°C.

Aspect 16

The fabrication liquid according to any of the above Aspects 11 to 15, in which the organic solvent has a boiling point at 760 mmHg of 150°C or higher.

The method for producing the three-dimensional fabricated object according to any one of the above Aspects 1 to 10 and the fabrication liquid for producing the three-dimensional fabricated object according to any one of the above Aspects 11 to 16 can solve the above-mentioned various conventional problems and achieve the object of the present invention.

Any one of the above-described operations may be performed in various other ways, for example, in an order different from the one described above.

## Claims

**1.** A method for producing a three-dimensional fabricated object, the method comprising:

forming (S1) a powder layer containing a powder containing metal particles; and
applying (S2), to the powder layer, a fabrication liquid containing an organic solvent and at least one high-acid-value compound with an acid value of 120 mgKOH/g or more, selected from the group consisting of a rosin compound, a styrene compound, and an acrylic compound.

**2.** The method according to claim 1, wherein the high-acid-value compound comprises at least one selected from the group consisting of an acid-modified rosin, a polymerized rosin, a hydrogenated rosin, a rosin-modified maleic acid resin, a formylated rosin, a fumarated rosin, a rosin-modified alkyd resin, an acrylated rosin resin, a styrene acrylic resin, a styrene maleic acid resin, and an acrylic resin.

**3.** The method according to claim 1 or 2, wherein the fabrication liquid contains the rosin compound and further contains a resin having a structural unit represented by the following structural formula (1).

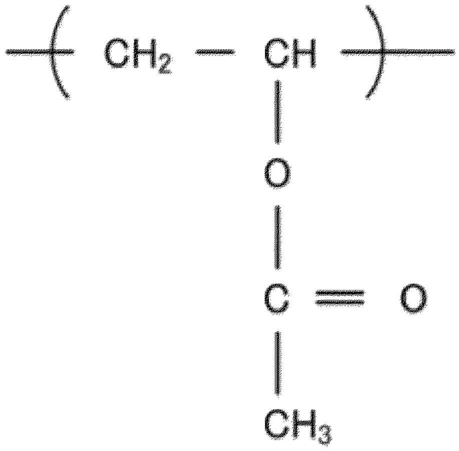 ... Structural Formula (1)

**4.** The method according to any one of claims 1 to 3, wherein the metal particles contain aluminum.

**5.** The method according to claim 4, wherein the metal particles further contain at least one selected from the group consisting of silicon and magnesium.

**6.** The method according to any one of claims 1 to 5, further comprising:
heating (S4) the powder layer to which the fabrication liquid has been applied, at a temperature equal to or lower than a boiling point at 760 mmHg of the organic solvent.

**7.** The method according to claim 6, further comprising:
degreasing (S6) the powder layer to which the fabrication liquid has been applied, the degreasing including: increasing temperature from the temperature equal to or lower than the boiling point at 760 mmHg of the organic solvent to a temperature equal to or higher than a decomposition temperature of an organic material included in the powder layer.

**8.** The method according to claim 7, wherein the degreasing is performed at 200°C or higher and 570°C or lower.

**9.** The method according to claim 8, further comprising sintering (S7) the degreased powder layer.

**10.** A fabrication liquid for producing a three-dimensional fabricated object, to be applied to a powder layer containing a powder containing metal particles, the fabrication liquid comprising:

at least one high-acid-value compound with an acid value of 120 mgKOH/g or more, selected from the group consisting of a rosin compound, a styrene compound, and an acrylic compound; and
an organic solvent.

**11.** The fabrication liquid according to claim 10, wherein the fabrication liquid has a viscosity of 5 mPa·s or more and 50 mPa·s or less at 25°C.

**12.** The fabrication liquid according to claim 10 or 11, wherein the fabrication liquid has a surface tension of 40 mN/m or less at 25°C.

**13.** The fabrication liquid according to any one of claims 10 to 12, wherein the high-acid-value compound has a glass transition temperature of 45°C or higher.

**14.** The fabrication liquid according to any one of claims 10 to 13, wherein the organic solvent has a viscosity of 5 mPa·s or more and 50 mPa·s or less at 25°C.

**15.** The fabrication liquid according to any one of claims 10 to 14, wherein the organic solvent has a boiling point at 760 mmHg of 150°C or higher.

FIG. 1

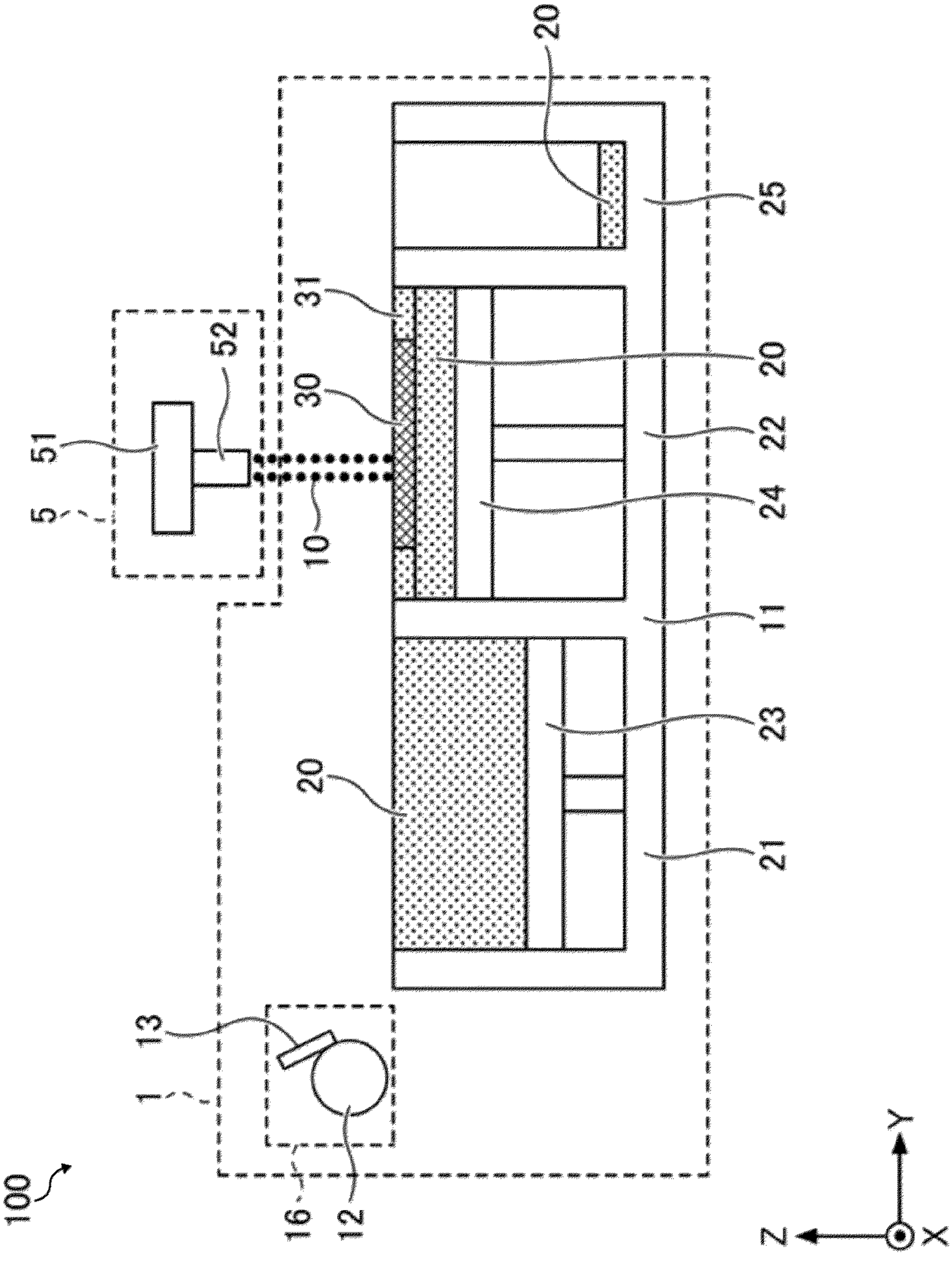

FIG. 2A

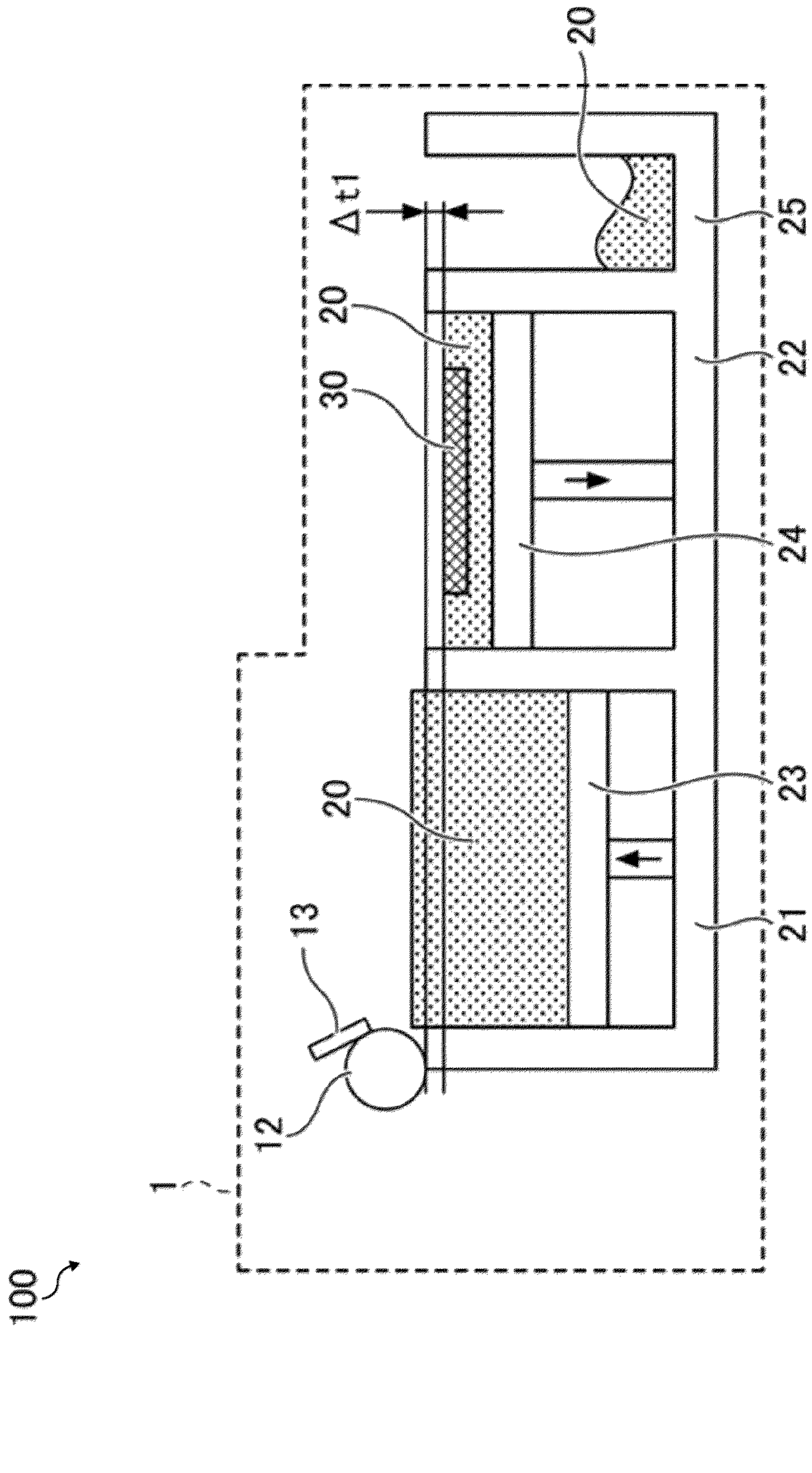

FIG. 2B

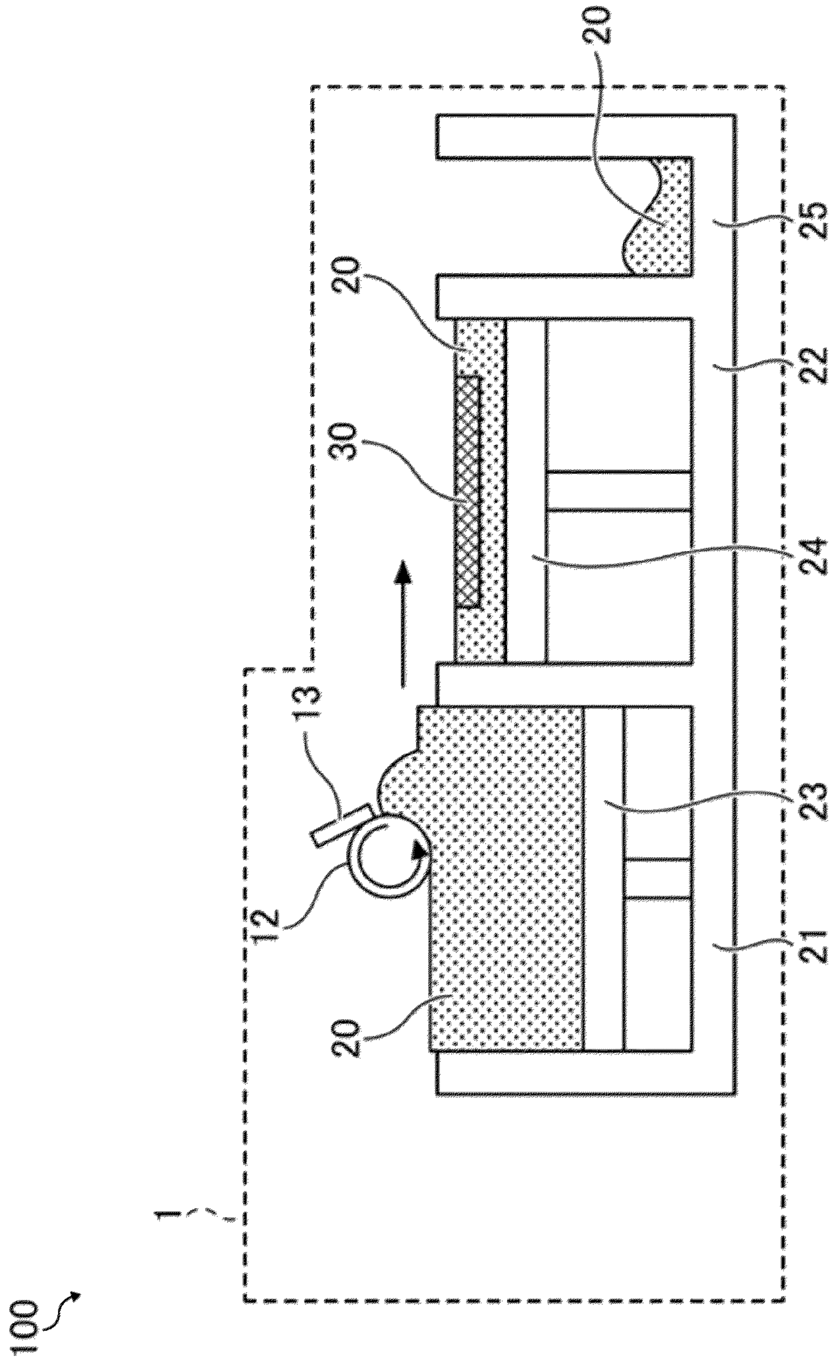

FIG. 2C

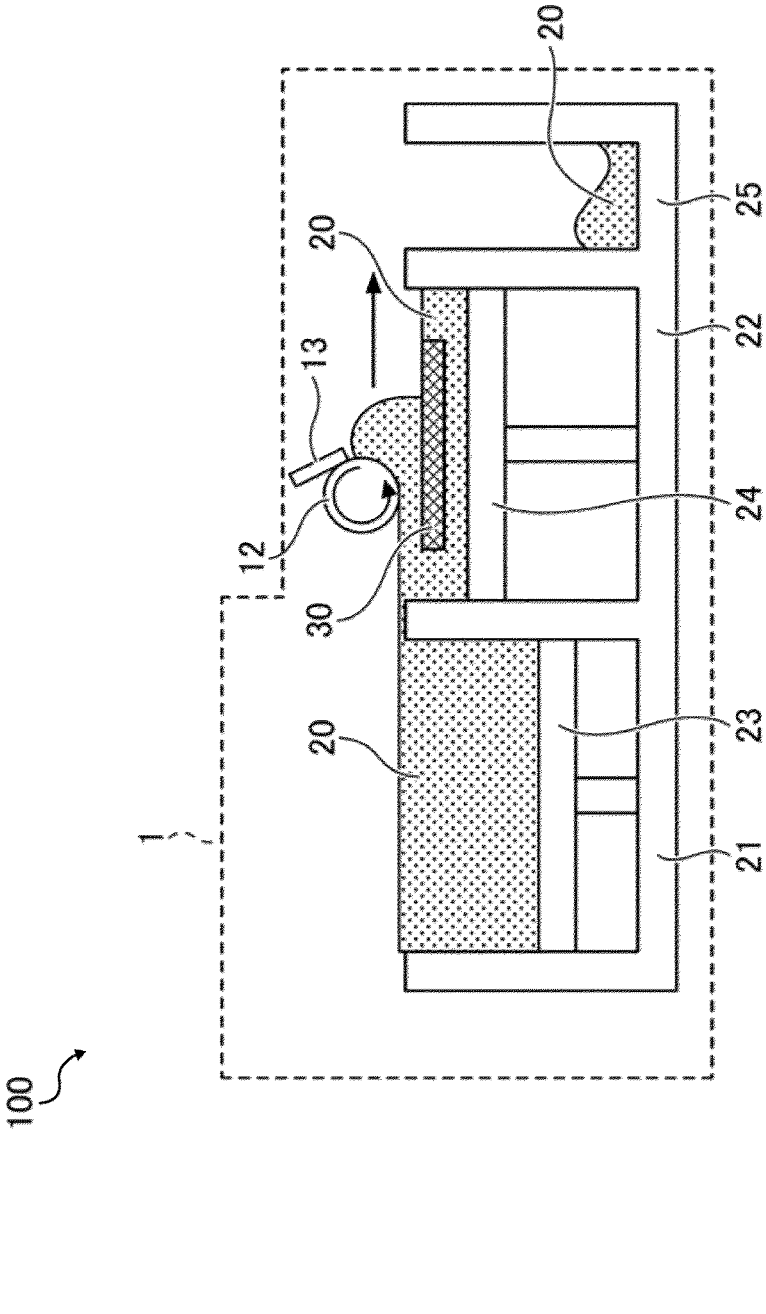

FIG. 2D

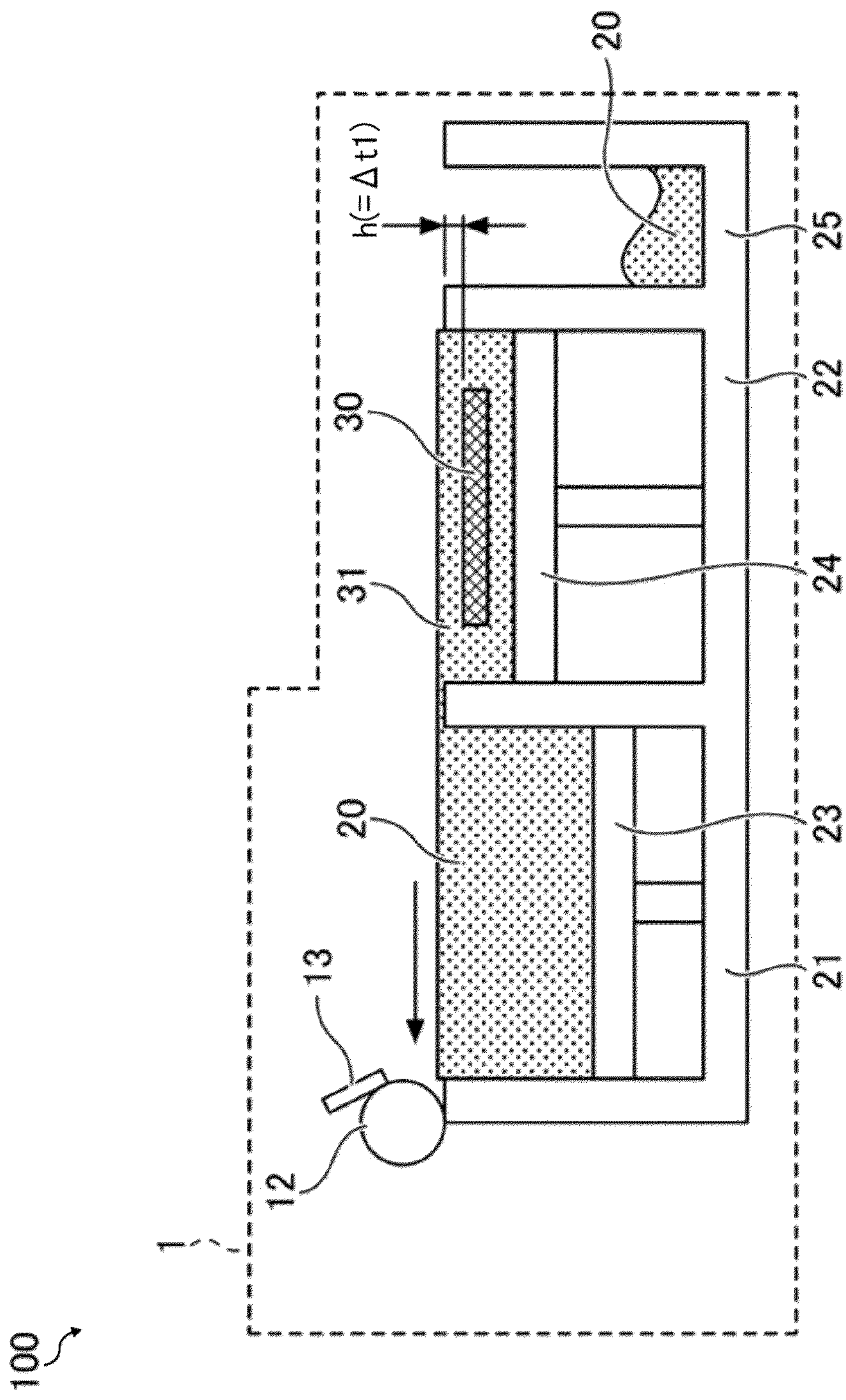

FIG. 2E

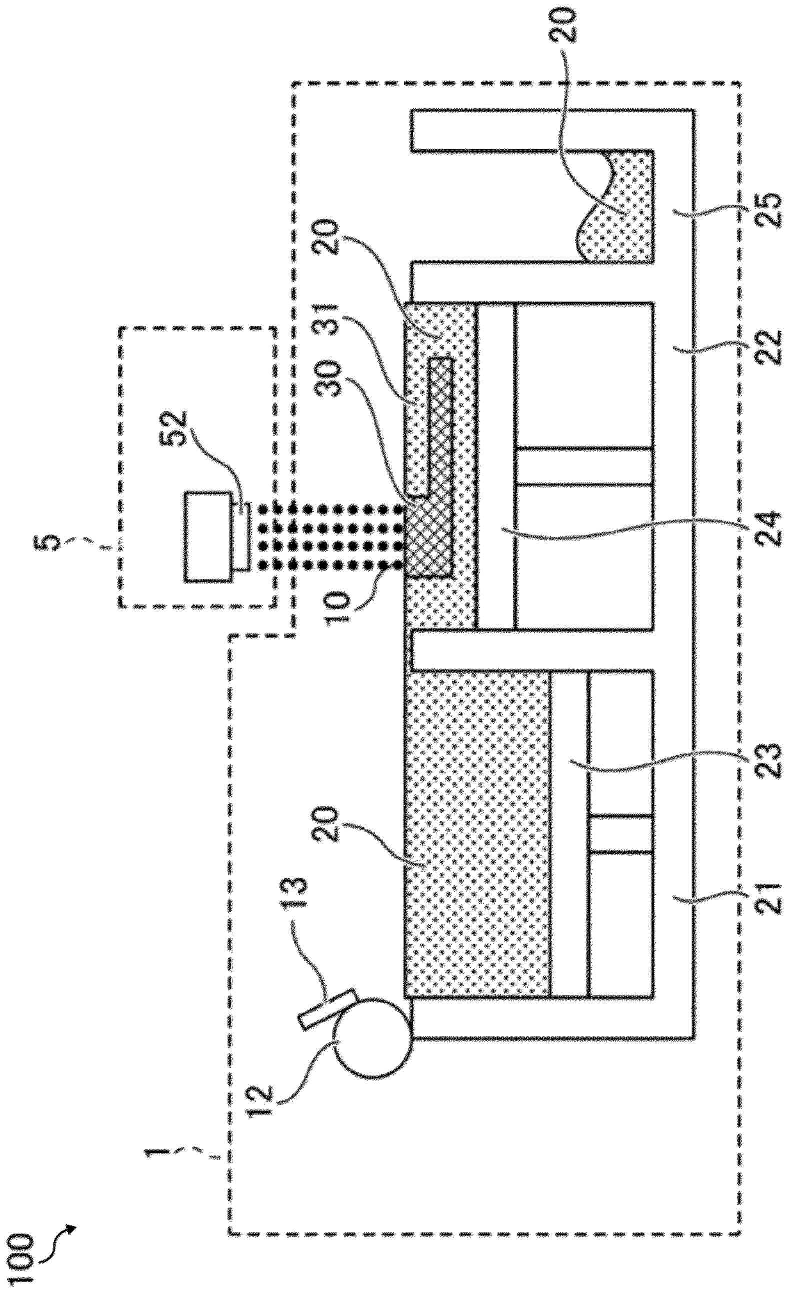

FIG. 3

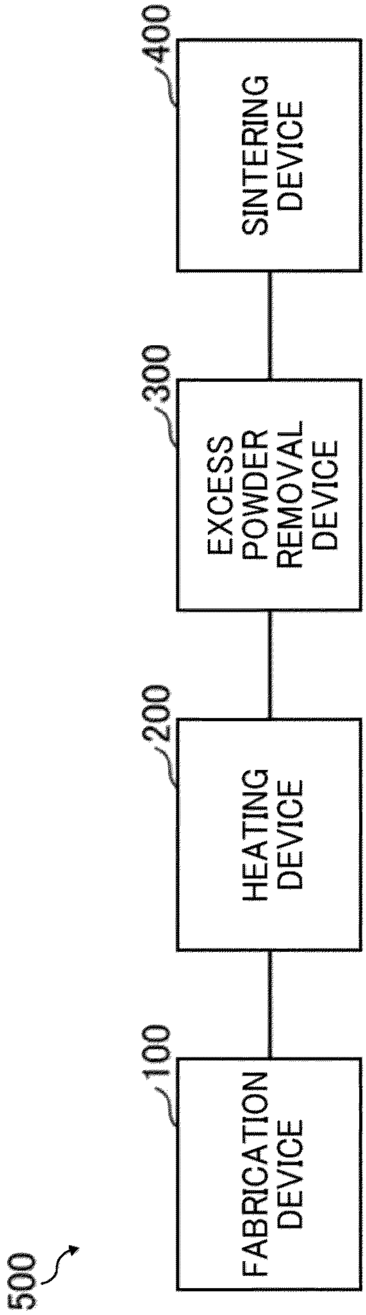
500
100
FABRICATION DEVICE
200
HEATING DEVICE
300
EXCESS POWDER REMOVAL DEVICE
400
SINTERING DEVICE

FIG. 4

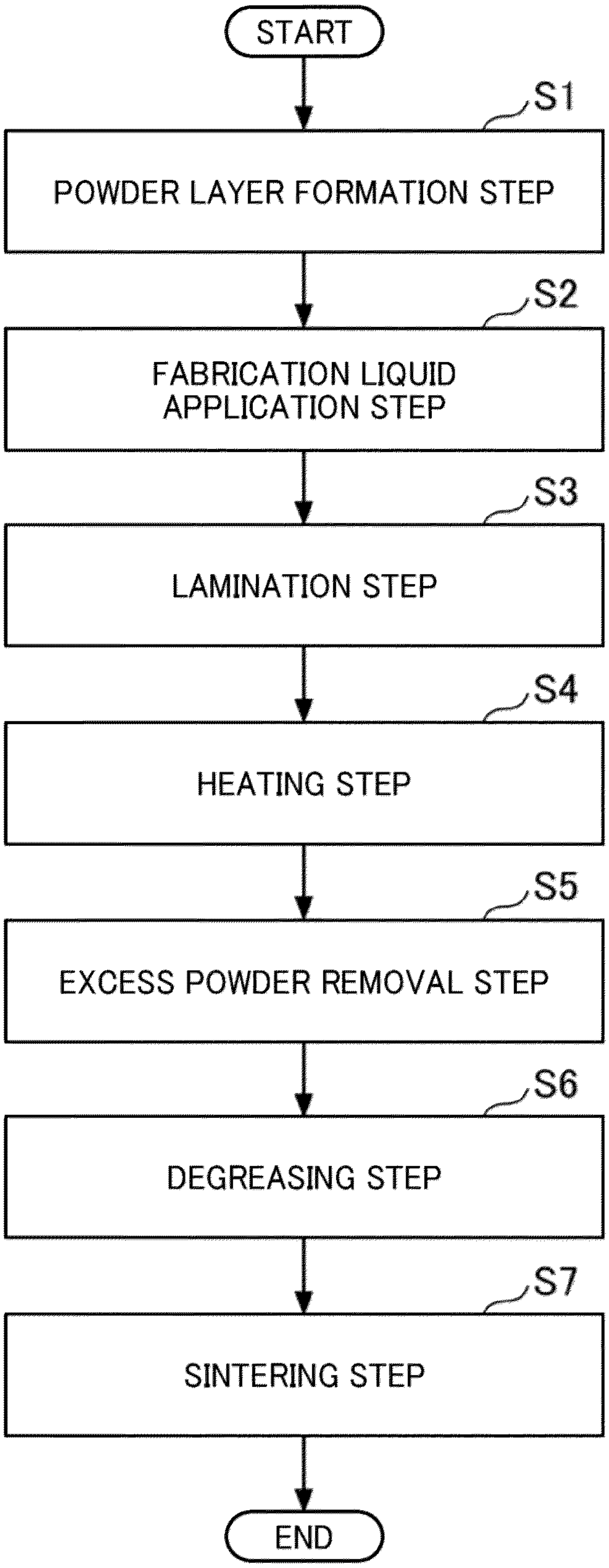
START
S1
POWDER LAYER FORMATION STEP
S2
FABRICATION LIQUID APPLICATION STEP
S3
LAMINATION STEP
S4
HEATING STEP
S5
EXCESS POWDER REMOVAL STEP
S6
DEGREASING STEP
S7
SINTERING STEP
END

Europäisches Patentamt
European Patent Office
Office européen des brevets

# EUROPEAN SEARCH REPORT

Application Number
EP 24 19 6597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 919 537 B2 (CANON KK [JP]) 20 March 2018 (2018-03-20)<br>* column 3, line 36 - line 40 *<br>* example 1 *<br>* figure 3 *<br>* column 6, line 52 - line 55 *<br>----- | 1-15 | INV.<br>C22C1/04<br>B22F1/102<br>B33Y10/00<br>B22F10/14 |
| X<br><br>A | US 10 795 515 B2 (FUJIFILM CORP [JP]) 6 October 2020 (2020-10-06)<br>* table 2 *<br>* Material A-14 *<br>----- | 10,13<br><br>1-9,11,<br>12,14,15 | |
| A | EP 3 995 229 A1 (RICOH CO LTD [JP]) 11 May 2022 (2022-05-11)<br>* example 1 *<br>* tables 1-1 *<br>----- | 1-15 | |

TECHNICAL FIELDS SEARCHED (IPC)

C22C
B22F
B33Y
B29C

The present search report has been drawn up for all claims

1

| Place of search | Date of completion of the search | Examiner |
|---|---|---|
| The Hague | 13 February 2025 | Fodor, Anna |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 24 19 6597

This annex lists the patent family members relating to the patent documents cited in the above-mentioned European search report. The members are as contained in the European Patent Office EDP file on
The European Patent Office is in no way liable for these particulars which are merely given for the purpose of information.

13-02-2025

| Patent document cited in search report | Publication date | Patent family member(s) | Publication date |
|---|---|---|---|
| US 9919537 B2 | 20-03-2018 | CN 104723553 A | 24-06-2015 |
| | | CN 105829117 A | 03-08-2016 |
| | | EP 3083252 A1 | 26-10-2016 |
| | | JP 6452430 B2 | 16-01-2019 |
| | | JP 6544920 B2 | 17-07-2019 |
| | | JP 2015134499 A | 27-07-2015 |
| | | JP 2015134500 A | 27-07-2015 |
| | | KR 20150071645 A | 26-06-2015 |
| | | KR 20160096682 A | 16-08-2016 |
| | | RU 2014151373 A | 10-07-2016 |
| | | US 2015165739 A1 | 18-06-2015 |
| | | US 2016318313 A1 | 03-11-2016 |
| | | US 2018001672 A1 | 04-01-2018 |
| | | WO 2015093050 A1 | 25-06-2015 |
| US 10795515 B2 | 06-10-2020 | CN 108025533 A | 11-05-2018 |
| | | JP 6615901 B2 | 04-12-2019 |
| | | JP WO2017057348 A1 | 16-08-2018 |
| | | US 2018210580 A1 | 26-07-2018 |
| | | WO 2017057348 A1 | 06-04-2017 |
| EP 3995229 A1 | 11-05-2022 | CN 114096395 A | 25-02-2022 |
| | | EP 3995229 A1 | 11-05-2022 |
| | | JP WO2021002479 A1 | 07-01-2021 |
| | | US 2022112329 A1 | 14-04-2022 |
| | | WO 2021002479 A1 | 07-01-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6262404 B